# EUROPÄISCHE PATENTSCHRIFT

(11) **EP 1 247 031 B1**
(45) Veröffentlichungstag und Bekanntmachung des Hinweises auf die Patenterteilung: **28.05.2003**
(21) Anmeldenummer: 01903631.8
(22) Anmeldetag: 09.01.2001
(51) Int. Cl.: F16H 63/30

(54) **ELEKTRO-HYDRAULISCHE STEUERUNG FÜR EIN PERSONENKRAFTFAHRZEUGGETRIEBE**
ELECTRO-HYDRAULIC CONTROLLER FOR A PASSENGER VEHICLE GEARBOX
ORGANE DE COMMANDE ELECTROHYDRAULIQUE POUR UNE BOITE DE VITESSES DE VOITURE DE TOURISME

(30) Priorität: 10.01.2000 DE 20000231 U; 24.06.2000 DE 20015782 U
(43) Veröffentlichungstag der Anmeldung: 09.10.2002
(73) Patentinhaber: ISE Industries GmbH, 58455 Witten (DE)
(72) Erfinder: GROHNERT, Hartmut, 58455 Witten (DE)
(74) Vertreter: Patentanwälte Wenzel & Kalkoff
(86) Internationale Anmeldenummer: EP0100164
(87) Internationale Veröffentlichungsnummer: WO01051829

(56) Entgegenhaltungen:
- EP-A- 0 541 035
- DE-A- 19 756 639
- DE-A- 19 950 443
- DE-B- 1 080 865
- US-A- 4 445 393

## Beschreibung

Die vorliegende Erfindung betrifft eine elektro-hydraulische Steuerung für ein Personenkraftfahrzeug-Getriebe, wie gattungsgemäß bekannt aus der US-A-4 445 393.

Bei Steuerungen für Getriebe wird nach dem Stand der Technik anhand der Art der Betätigung zwischen mechanischen und hydraulischen bzw. elektro-hydraulischen Steuerungen unterschieden. Bei mechanischen Steuerungen erfolgt die Kraftübertragung zum Auslösen eines Schaltvorgangs beispielsweise über Bowdenzüge und Hebel, während hydraulische Steuerungen über Flüssigkeitsdruck betrieben werden. Die einzelnen Schaltvorgänge werden über Elektromotoren, Hydromotoren bzw. Ventile oder bei einer mechanischen Schaltungsart mit Schrittmotoren oder Hydro-Zylindern betätigt.

Von elektro-hydraulischen Steuerungen nach dem Stand der Technik ist als Nachteil insbesondere bekannt, daß sie einen komplexen und aus vielen Einzelteilen bestehenden Aufbau aufweisen. Die Einzelteile sind dabei im Regelfall Sonderteile, die separat für eine Steuerung angefertigt werden müssen. Dazu ist eine Steuerung an jeden Anwendungsfall bzw. jedes Getriebe in besonderer Weise anzupassen, so daß ein Austausch innerhalb verschiedener Getriebetypen im Regelfall nicht möglich ist.

Weiter erlauben bekannte Steuerungen auch kein beliebig schnelles Wechseln der Gänge, da über einen mechanischen Steuerblock ein Schaltfinger in einer engen Gasse aus Mitnehmern einzelner Schaltgabeln zur Auswahl eines Ganges erst positioniert und dann betätigt werden muß. Durch den Einsatz verschiedener Sicherungsmaßnahmen, die Fehlstellungen verhindern sollen und nur das Schalten eines einzigen Mitnehmers gestatten, ist der mechanische Aufwand bei der Realisation einer derartigen Steuerung nach dem Stand der Technik sehr hoch.

Schließlich ist auch der Zusammenbau eines Getriebes kompliziert und anfällig für Fehler bzw. Beschädigungen insbesondere im Bereich des Schaltfingers und der engen Gasse aus Mitnehmern. Diese Probleme treten dabei nicht nur bei der Erstmontage, sondern auch bei der Wartung oder Reparatur auf.

Es besteht daher die Aufgabe, eine elektro-hydraulische Steuerung und ein Getriebe zu schaffen, wobei die Steuerung in kompakter Bauweise mit Anpassungsmöglichkeiten für verschiedene Getriebe ausführbar ist und das Getriebe in Abstimmung mit der Steuerung wartungsfreundlich ausgebildet ist.

Die Aufgabe wird erfindungsgemäß gelöst durch eine elektro-hydraulische Steuerung für ein Kraftfahrzeug-Getriebe, mit einem Steuerblock, der
- aus einem einstückigen Körper gebildet ist,
- an einer ersten Oberfläche zur Anordnung von Magnetventilen sowie deren Druckversorgung und
- an einer zweiten Oberfläche als Verschluß zur Befestigung über einer Öffnung einer Glocke des Getriebes ausgebildet ist, wobei
- der Steuerblock in seinem Inneren Schaltzylinder mit axial verschieblichen Schaltkolben umfaßt,
- an denen jeweils ein Schaltfinger zur Herstellung eines Kontaktbereiches mit einem Mitnehmer einer Schaltgabel des Getriebes zur Kraftübertragung zugänglich angeordnet ist.

Ferner wird die Aufgabe durch ein Getriebe mit den Merkmalen von Anspruch 26 unter Einsatz einer erfindungsgemäßen elektro-hydraulische Steuerung gelöst.

Eine erfindungsgemäße elektro-hydraulische Steuerung für ein Kraftfahrzeug-Getriebe weist mit einem Steuerblock ein zentrales Element auf, das an einer außen liegenden Oberfläche als Träger für Magnetventile dient und alle sonst wichtigen Funktionsteile in sich vereint, wie nachfolgend ausgeführt wird. Die gesamte elektro-hydraulische Steuerung zeichnet sich somit durch eine sehr kompakte einstückige Bauweise bei geringem Raumbedarf und mit einer kleinen Anzahl von Leitungen aus. Dabei sind bei einem fertig aufgebauten Getriebe die wesentlichen Elemente von außen zugänglich.

Besonders vorteilhaft ist die Zuordnung jeweils eines Schaltfingers an dem Steuerblock zur Herstellung eines Kontaktbereiches mit einem Mitnehmer einer Schaltgabel des Getriebes. So ist der Steuerblock als ganzes Element von dem Getriebe entnehmbar, ohne daß auch z.B. die Schaltgabeln aus dem Gehäuse entnommen werden müssen. Es ist ferner ein direktes Wählen eines Ganges mit sofortigem Schalten dieses Ganges möglich. Damit ist dieser Schaltvorgang schneller als in bekannten Schaltungen möglich. Ferner ist eine nach dem Stand der Technik erforderliche mechanische Vorwähleinrichtung im Getriebe entbehrlich.

Der Anwender bzw. Fahrer eines Kraftfahrzeugs mit einem erfindungsgemäßen Getriebe bzw. einem Getriebe unter Nutzung einer erfindungsgemäßen elektro-hydraulischen Steuerung kann zudem auch von einem Gang in einen beliebigen anderen Gang direkt wechseln. Das ist insbesondere nach einem starken Abbremsen des Fahrzeugs notwendig. Die Fahrzeuggeschwindigkeit und die Motordrehzahl können in einem derartigen Fall so weit abgesunken sein, daß beispielsweise aus dem fünften Gang in den dritten oder gar zweiten Gang geschaltet werden muß. Unter Einsatz erfindungsgemäßer Elemente kann dieser Schaltvorgang direkt und somit sehr schnell ausgeführt werden. Bei der Wahl beispielsweise des zweiten Gangs wird ein Gangschalthebel frei aus der Stellung für den fünften Gang in die des zweiten Gangs bewegt. Hierdurch wird eine Elektronik betätigt, die dann über einen Aktuator insbesondere mit einem Abgleich des Motormanagements den eigentlichen Schaltvorgang im Getriebe auslöst. Bei Getrieben nach dem Stand der Technik ist hingegen kein direktes Schalten möglich, hier muß das Getriebe zwingend vom fünften über den vierten in den dritten Gang geschaltet werden. Dazu sind bei bekannten Steuerungen extra Schaltkulissen vorgesehen, in denen der Fahrer einen Gangschalthebel zur Wahl der Gänge nur in der beschriebenen Weise und damit ohne ein Überspringen von Gängen bewegen kann. Häufig muß hier bei jedem dieser Zwischenschaltvorgänge auch noch gekuppelt werden, was den Verschleiß an der Kupplung erhöht.

Unter Verwirklichung der Merkmale aus den Unteransprüchen ergibt sich ein kompakter, im wesentlichen flachquaderförmiger Steuerblock. Dieser Steuerblock weist vorzugsweise nur zwei Anschlüsse zur Druckversorgung der drei oder vier Magnetventile der elektro-hydraulischen Steuerung auf: eine Druckzuführung P und eine Druckableitung T. Die weiter erforderlichen Druckleitungen bzw. Zwischenverbindungen sind vorteilhafterweise alle in dem Steuerblock integriert. Die Ansteuerung der Magnetventile erfolgt vorzugsweise über elektrische Kabel, so daß der Gesamtaufwand an Kabeln und Leitungen bei einer erfindungsgemäßen Steuerung gering ist.

Der Steuerblock wird aus einem massiven Metallblock oder aber als Druckgußteil hergestellt, beispielsweise aus Aluminium. Die Zylinder sowie alle Druckversorgungs- und Druckverbindungsleitungen sind als Bohrungen ausgeführt. Die Durchbrüche an der zweiten Oberfläche für die Schaltfinger werden z.B. durch Fräsungen gebildet. Dabei sind die Druckversorgungs- und Druckverbindungsleitungen als im wesentlichen senkrecht zueinander stehende, von den langen Längsseiten aus verlaufende Sackbohrungen realisiert. Auch bei Einsatz eines Druckgußteils sind diese Arbeitsgänge zur Gewährleistung der Maßhaltigkeit der Teile erforderlich. Durch eine beschriebene Ausführung ist eine einfache Serienherstellung unter Einsatz z.B. von CNC-Automaten mit relativ überschaubaren Programmen möglich. Zur Herstellung von nach außen druckdichten Leitungssystemen in dem Steuerblock sind die Sackbohrungen an den langen Längsseiten beispielsweise durch Blindstopfen verschlossen und/oder insbesondere je langer Längsseite durch jeweils eine Abdeckung gesichert. Die Abdeckungen sind vorzugsweise in Form von Platten ausgeführt, die insbesondere in die Bohrungen hinein ragende Zapfen mit Dichtungsringen aufweisen. Ferner sind hier Vorrichtungen zum gleichmäßigen Zuführen von Öl vorgesehen, die nach außen dicht verschließbar sind.

Die Druckversorgungs- und Druckverbindungsleitungen sind in einer Weiterbildung in einer Ebene in dem Steuerblock angeordnet. Bei Einsatz weiterer Schaltkolben wird eine Anordnung der Druckversorgungs- und Druckverbindungsleitungen in mehreren zueinander im wesentlichen parallelen Ebenen bevorzugt. Hierdurch kann die Baugröße des Steuerblock gering gehalten werden, wobei die Herstellung nicht wesentlich erschwert wird. Da zur mechanischen Kraftübertragung nur die Schaltfinger in das Innere der Glocke greifen sind das Hydraulik-Fluid in dem Steuerblock und das Getriebeöl optimal voneinander getrennt, so daß unerwünschte Vermischungen und gegenseitige Verunreinigung sicher vermieden bzw. separate Maßnahmen nicht ergriffen werden müssen.

Die Schaltkolben sind in einem jeweiligen Schaltzylinder des Steuerblocks aus einer Nullposition im drucklosen Zustand durch einseitige Druckbeaufschlagung axial in vorzugsweise zwei Schaltpositionen verschieblich. Die Verschiebung der Schaltkolben in die Schaltpositionen erfolgt gegen eine Rückstellkraft, die insbesondere durch je ein Federelement erzeugt wird. Die im drucklosen Zustand automatisch eingestellte Nullposition ohne Anwahl eines Ganges stellt dabei einen zusätzlichen Sicherheitsvorteil dar, da sich eine erfindungsgemäße Getriebesteuerung bei Abfall des normalen Betriebsdrucks, d.h. bei einer Störung, selbständig in einen neutralen Zustand fährt und dort bis zur Störungsbehebung verharrt. Auch im Störungsfall wird so kein undefinierter Schaltzustand erreicht. Es können dann manuelle Notfallschaltungen vorgesehen werden, um einen Basisbetrieb zu gewährleisten, beispielsweise ein Fahren nur im ersten Gang/oder zweiten Gang.

In einer wesentlichen Weiterbildung ist an einem Schaltkolben ein Stiftfortsatz vorgesehen. Dieser Stiftfortsatz erstreckt sich an dem Schaltkolben einstückig angeformt in axialer Richtung und dient zum Halten bzw. Führen des Federelements. Dabei ist das Federelement vorzugsweise in einer Druckkammer eines Schaltzylinders angeordnet. Ferner wird bevorzugt in der Druckkammer eine Tasche zur Aufnahme und Lagefixierung eines zweiten Endes des Federelements angeordnet, so daß das Federelement beidseitig fixiert ist.

Vorteilhafterweise ist der Stiftfortsatz an dem Schaltkolben zum Eingriff in eine Austrittsöffnung einer Druckversorgungs- und Druckverbindungsleitung des jeweiligen Schaltzylinders ausgebildet, insbesondere bei Anordnung im Bereich einer passiven Totlage bzw. Endposition. Hierdurch wird z.B. die Baulänge der Druckkammer verringert. In einer bevorzugten Ausführungsform einer erfindungsgemäßen elektro-hydraulischen Steuerung ist aber der Stiftfortsatz in der bzw. zusammen mit der Druckversorgungs- und Druckverbindungsleitung als Drossel und/oder Endlagendämpfung ausgebildet ist. Als Endanschlag wird so nicht ein Federelement o.ä. genutzt. Das vorhandene Federelement wird folglich allein auf die Einstellung einer Neutralposition in einem drucklosen Zustand hin ausgelegt. Die Endlagendämpfung mit einem rechtzeitig einsetzenden Abbremsen eines Schaltkolbens wird indirekt dadurch erreicht, daß das aus der Druckkammer durch die Druckversorgungs- und Druckverbindungsleitung ausströmende Fluid fortschreitend gedrosselt wird. Dazu ist durch die beschriebene Anordnung kein separates Element mit komplizierter Steuerung und zusätzlichem Fertigungsaufwand und Platzbedarf erforderlich. Durch die vorstehende Integration in einem Bereich der Druckkammer ist die Drosselfunktion in Abhängigkeit von der Stellung des Schaltkolbens präzise einstellbar, wobei die Baugröße der Anordnung im wesentlichen unverändert bleibt. So wird in kompakter Bauweise eine Anordnung geschaffen, in der eine verschleiß- und wartungsfreie Endlagendämpfung zur effektiven Geräuschminderung und Verlängerung der Lebensdauer realisiert ist.

Je Schaltkolben ist ein Schaltfinger vorgesehen, der mindestens einen aktiven Schaltzustand aufweist. Der Schaltfinger steht mit einem mittleren Bereich des Schaltkolbens in Verbindung. Er ist dort beispielsweise angelenkt, oder er ragt in den mittleren Bereich des Schaltkolbens schwenkbar hinein und ist über einen Gelenkpunkt in dem Steuerblock gelagert. Dabei ist der Schaltfinger als Doppelhebel ausgebildet und bietet vorteilhafterweise die Möglichkeit eines Weg- bzw. Längenausgleichs. Der Schaltfinger ist in einer weiteren alternativen Ausführungsform ein integraler Bestandteil einer Schaltgabel, der in einfacher Form in dem Schaltkolben gelagert ist. Ferner kann der Schaltfinger in einem mittleren Bereich des Schaltkolbens im wesentlichen senkrecht zu der axialen Verschiebungsrichtung an dem Schaltkolben fixiert sein. Die vorstehend genannten unterschiedlichen Lösungen der Ausbildung der Schaltfinger sind miteinander fertigungstechnisch vorteilhaft und auch raumsparend kombinierbar, wie nachfolgend anhand eines Ausführungsbeispiels erläutert wird.

Der Steuerblock enthält zur Ansteuerung eines Fünfganggetriebes mindestens drei, vorzugsweise aber vier Schaltkolben. Im Fall von drei Schaltkolben in dem Steuerblock bedient ein Schaltfinger den fünften Gang in der einen Schaltposition und den Rückwärtsgang in der anderen. Zur Absicherung einer Fehlschaltung sind geeignete Maßnahmen bekannt. Es wird jedoch bevorzugt, auch für ein Fünfganggetriebe vier Schaltkolben vorzusehen. Dann weisen der fünfte Gang und der Rückwärtsgang aus Sicherheitsgründen getrennte Schaltkolben auf. Diese Gänge werden damit auch durch voneinander räumlich trennte Schaltfinger betätigt. Die Schaltkolben für den fünften Gang und den Rückwärtsgang weisen somit jeweils nur eine aktive Schaltstellung und damit auch nur einen Rückstellmechanismus auf. Die zweite Aktivstellung ist vorzugsweise aber wie bei allen übrigen Zylindern und Schaltkolben gefertigt und dann in bekannter Weise passiv geschaltet. So ist ein derartiger Steuerblock bei minimaler Anpassung sofort auch für ein Sechsganggetriebe einsetzbar. Der fünfte und der sechste Gang werden dann über die beiden Aktivstellungen eines gemeinsamen Schaltkolbens gesteuert. Der Rückwärtsgang ist weiter einem separaten Schaltkolben zugeordnet.

Die Schaltzylinder sind in Form von Bohrungen an den langen Längsseiten des Steuerblocks angeordnet. In einer Basisausführung sind die Bohrungen in einer Reihe nebeneinander und insbesondere parallel verlaufend ausgeführt. In einer Weiterbildung wird eine noch kompaktere Bauform des Steuerblocks dadurch erzielt, daß die Bohrungen der Schaltzylinder zueinander versetzt in zwei Reihen angeordnet sind. Hieran kann die Wahl der Schaltkolben nach ihrer Art, Länge und Lage sowie die Wahl der jeweiligen Schaltfinger zur Optimierung der Hebellängen oder der Schaltwege vorteilhaft angepaßt sein. In einem Ausführungsbeispiel wird auf eine Möglichkeit hingewiesen, durch deren Verwirklichung die Fertigung wesentlich vereinfacht wird.

Als besonderer Vorteil der vorliegenden Erfindung werden in einer erfindungsgemäßen elektro-hydraulischen Steuerung als Magnetventile Standardventile eingesetzt. Bekannte Magnetventile sind insbesondere mit elektrischen Steckanschlüssen versehen und ferner einfach sowie schnell durch Ab- und Anschrauben austauschbar. Auch der Steuerblock ist mit bekannten hydraulischen Schnellanschlüssen versehen, wodurch selbst ein kompletter Austausch einer erfindungsgemäßen elektro-hydraulischen Steuerung ohne großen Zeitaufwand durchführbar ist. Hierzu trägt auch die erfindungsgemäße Einrichtung einer Schnittstelle zwischen dem Steuerblock und einem im Getriebegehäuse befindlichen Schaltgabelteil bei. Somit wird bei der Realisierung einer elektro-hydraulischen Steuerung gemäß vorliegender Erfindung bewußt auf die erprobte Technik von am Markt verfügbaren Bauteilen zurückgegriffen, was sich auf die Lagerhaltung bei der Produktion und der Wartung sowie auf die Kosten der Einzelteile positiv auswirkt.

Ein erfindungsgemäßes Getriebe ist in einfacher Weise in zwei Module teilbar. Diese Module sind separat herstellbare und einheitliche Baugruppen, nämlich einerseits das eigentliche Getriebe mit der gesamten Mechanik, aber ohne die Steuerung, und andererseits eine Steuerung gemäß vorliegender Erfindung. Die Verbindung erfolgt einfach durch Ineinanderschieben. Dabei weist der Steuerblock an der zweiten Oberfläche einen Flansch mit einer Dichtung vorzugsweise in Form eines O-Rings zum Abdichten der Öffnung der Glocke des Getriebes auf. Als zusätzliche Hilfe zur Positionierung und genauen Ausrichtung ist ferner mindestens ein Zentrierstift im Bereich des Flansches vorgesehen.

Positiv auf die Bauhöhe eines erfindungsgemäßen Getriebes wirkt sich aus, daß keine der herkömmlichen mechanischen Einrichtungen zum Vorwählen der Gassen mehr benötigt wird. In einer Weiterbildung weist das Getriebe an einem Schaltgabelmodul Mitnehmer auf, die in einer Reihe und gegenüber aus dem Stand der Technik bekannten Mitnehmern um 90° in eine Ebene parallel zu der zweiten Oberfläche des Schaltmoduls und der Schaltfinger geschwenkt liegen. Diese Ebene liegt somit im wesentlichen parallel zu der Trennebene zwischen dem eigentlichen Getriebe und der Steuerung. Beim Zusammensetzen greifen aufgrund der vorbeschriebenen Maßnahmen die Schaltfinger direkt und unter vielfacher Führung in den Bereich der Mitnehmer. So sind auch die Möglichkeiten einer Beschädigung von Einzelteilen beim Zusammenbau minimiert worden. Ferner ergibt sich ein sehr einfacher quasi letzter Schritt des Zusammenbaus. Hierdurch gestaltet sich ein erfindungsgemäßes Getriebe auch sehr reparatur- und wartungsfreundlich.

Die vorstehend genannten Module unterscheiden sich dabei sowohl in ihrer Aufgabe, als auch in ihrer Herstellung deutlich voneinander. So besteht der rotierende Teil des Getriebes im wesentlichen aus den Wellen, Zahnrädern und Schaltmuffen sowie deren Lagerung in einem Gehäuse, der s.g. Glokke. Die Herstellung von derartigen Getriebeteilen wie Wellen, Schaltmuffen und Zahnrädern sowie den zugehörigen Gehäusen wird traditionell mit der Herstellung bzw. dem Einbau von Lagern in einer dafür speziell eingerichteten Fabrik bzw. Zulieferfirma vorgenommen. Der Zusammenbau dieses Moduls wird vorteilhaft in eine Hand gelegt. Dieses Modul ist dabei durch die Glocke weitgehend geschlossen und kann gut transportiert werden. Aufgrund der im wesentlichen außerhalb der Glocke liegenden erfindungsgemäßen Steuerung kann die Glocke im Vergleich zu Getrieben nach dem Stand der Technik kleiner gebaut sein.

Von den vorgenannten Einzelteilen unterscheiden sich die Bauteile der eigentlichen Schaltung, die aus einer erfindungsgemäßen Steuerung und einem Schaltgabelmodul besteht. Hier sind insbesondere keine Zahnräder eingesetzt. Auch laufen die Teile dieses Moduls im Betrieb nicht mit hohen Drehzahlen, so daß an die Lagerungen ganz andere Anforderungen gestellt werden. Die Schaltgabeln bestehen beispielsweise aus Stanz-Biegeteilen, die dementsprechend ganz andere Werkzeuge und Materialien zur Herstellung benötigen, als es bei den vorstehend genannten Bauteilen des drehenden Getriebeteils der Fall ist. Die Steuerung kann dagegen weitgehend in spanender Verarbeitung durch Bohren und Fräsen und Drehen mit teilweise engen Toleranzen hergestellt werden. Es bietet sich also auch hier eine Gruppierung in zwei Module an, wobei die Module jedes für sich funktionsfähig zusammengesetzt, eingemessen, eingerichtet und getestet werden können.

Als weiterer wesentlicher Vorteil eines erfindungsgemäßen Getriebes ist der einfache Zusammenbau aus den vorstehend beschriebenen Modulen zu nennen. Die Steuerung steht mit den Schaltgabeln über die horizontal liegenden Mitnehmer des Schaltgabelmoduls in Kontakt. Die Schaltgabeln und deren Eingriff bzw. Kontakt mit den zu verschiebenden Schaltmuffen der jeweiligen Zahnräder stellt eine weitere Schnittstelle dar, die nun zwischen dem Schaltgabelmodul und dem rotierenden Teil des Getriebes liegt, das abkürzend als Getriebemodul bezeichnet wird. Die in Kontakt stehenden Teile sind im Vergleich zum Stand der Technik wesentlich größer und damit auch robuster. Ferner weisen die Module jeweils eine Vielzahl von frühen Berührungskontakten und Verbindungen zueinander auf, die ein problemloses Zusammenfügen ermöglichen. Damit ist der Zusammenbau aus vollständig voneinander getrennt gefertigten Modulen wesentlich vereinfacht.

Auch wenn im Rahmen der Beschreibung der vorliegenden Erfindung stets auf eine elektro-hydraulischen Steuerung Bezug genommen wird, so kann ein erfindungsgemäßes Funktionsprinzip auch auf eine pneumatische oder elektro-pneumatische Steuerung übertragen werden.

Nachfolgend werden Ausführungsbeispiele der Erfindung anhand der Zeichnung näher beschrieben. Die Zeichnung zeigt in
- Fig. 1: eine perspektivische Darstellung eines geöffneten Getriebes mit einer ersten Ausführungsform einer elektro-hydraulischen Steuerung;
- Fig. 2: eine seitliche Ansicht des geschlossenen Getriebes von Fig. 1 in einer Schnittdarstellung;
- Fig. 3: eine weitere seitliche Ansicht des Getriebes von Fig. 1 mit Darstellung der Montage oder Demontage der kompletten elektro-hydraulischen Steuerung;
- Fig. 4: eine Seitenansicht der elektro-hydraulischen Steuerung von Fig. 1;
- Fig. 5: eine Draufsicht auf die elektro-hydraulische Steuerung von Fig. 1;
- Fig. 6: eine weitere Seitenansicht der elektro-hydraulischen Steuerung von Fig. 1;
- Fig. 7: eine Schnittdarstellung einer ersten Ausführungsform eines Schaltkolbens der elektro-hydraulischen Steuerung von Fig. 1 im zusammengebauten Zustand an der Glocke in einer Seitenansicht;
- Fig. 8: eine Seitenansicht einer zweiten Ausführungsform eines Schaltkolbens in einer Schnittdarstellung analog zu der Darstellung von Fig. 7;
- Fig. 9: eine Seitenansicht einer dritten Ausführungsform eines Schaltkolbens analog der Darstellung von Fig. 7;
- Fig. 10: eine Schnittdarstellung einer ersten Ausführungsform eines Schaltzylinders einer elektro-hydraulischen Steuerung in einer Seitenansicht mit einem Schaltkolben gemäß der Ausführungsform von Fig. 9;
- Fig. 11: eine Schnittdarstellung einer weiteren Ausführungsform eines Schaltzylinders in einer Seitenansicht mit einem Schaltkolben gemäß der Ausführungsform von Fig. 7;
- Fig. 12: die Schnittdarstellung der elektro-hydraulischen Steuerung von Fig. 10 mit Angabe der Lage einer Schnittebene A-A;
- Fig. 13: eine Schnittdarstellung der Schnittebene A-A von Fig. 12;
- Fig. 14: die Schnittdarstellung der elektro-hydraulischen Steuerung von Fig. 10 mit Angabe der Lage einer Schnittebene B-B;
- Fig. 15: eine Schnittdarstellung der Schnittebene B-B von Fig. 14;
- Fig. 16: die Schnittdarstellung der elektro-hydraulischen Steuerung von Fig. 10 mit Angabe der Lage einer Schnittebene C-C;
- Fig. 17: eine Schnittdarstellung der Schnittebene C-C von Fig. 16;
- Fig. 18: eine Schnittdarstellung einer ersten Bauform einer elektro-hydraulischen Steuerung für ein Fünf- oder Sechsgang-Getriebe in einer Seitenansicht;
- Fig. 19: eine Draufsicht auf eine elektro-hydraulische Steuerung für ein Fünf- oder Sechsgang-Getriebe mit Angabe des Schaltbildes;
- Fig. 20: eine Schnittdarstellung einer Seitenansicht einer weiteren Ausführungsform einer elektro-hydraulischen Steuerung;
- Fig. 21: eine Draufsicht auf die elektro-hydraulische Steuerung von Fig. 19 mit Darstellung eines Verlaufes interner Bohrungen und der Anordnung von Anschlüssen für die Magnetventile und
- Fig. 22: eine Draufsicht auf eine elektro-hydraulische Steuerung für ein Fünfgang-Getriebe mit Angabe des Schaltbildes.

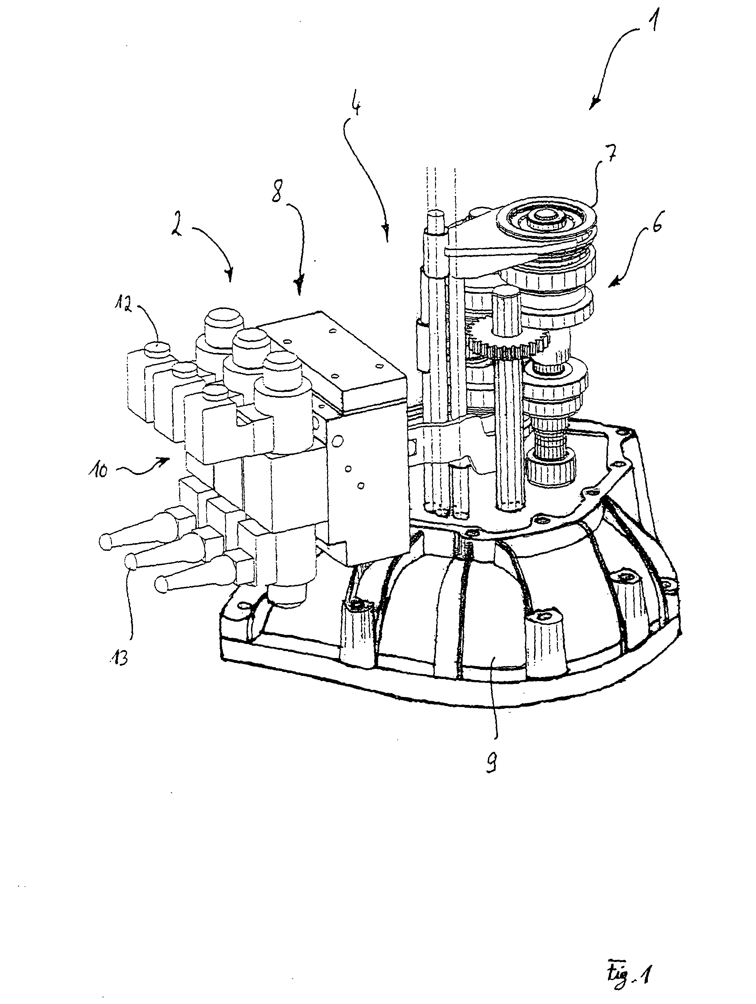

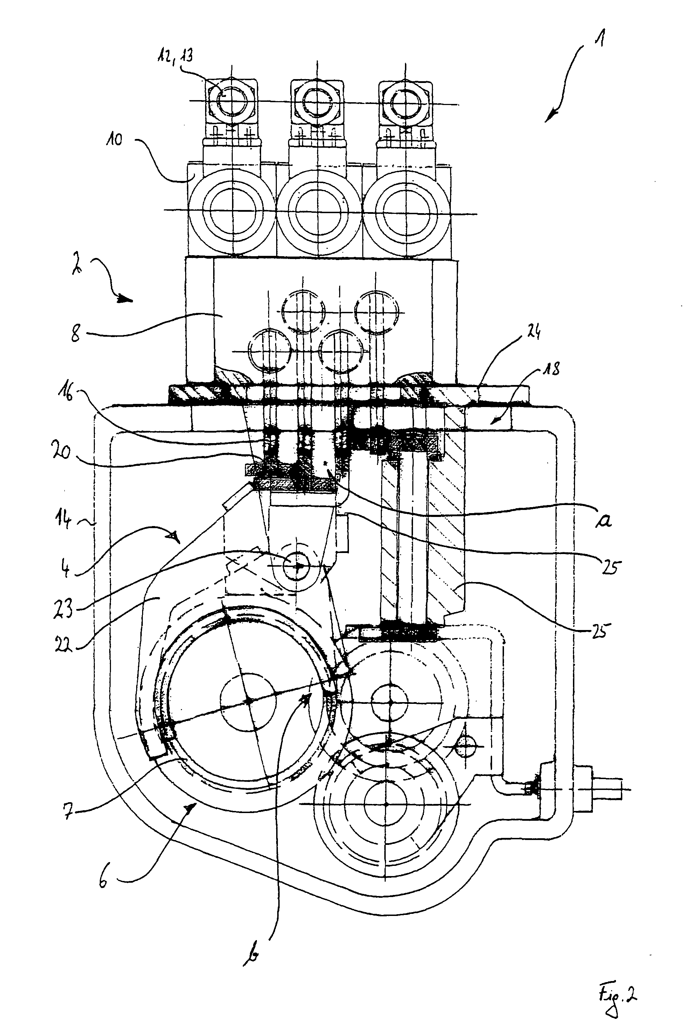

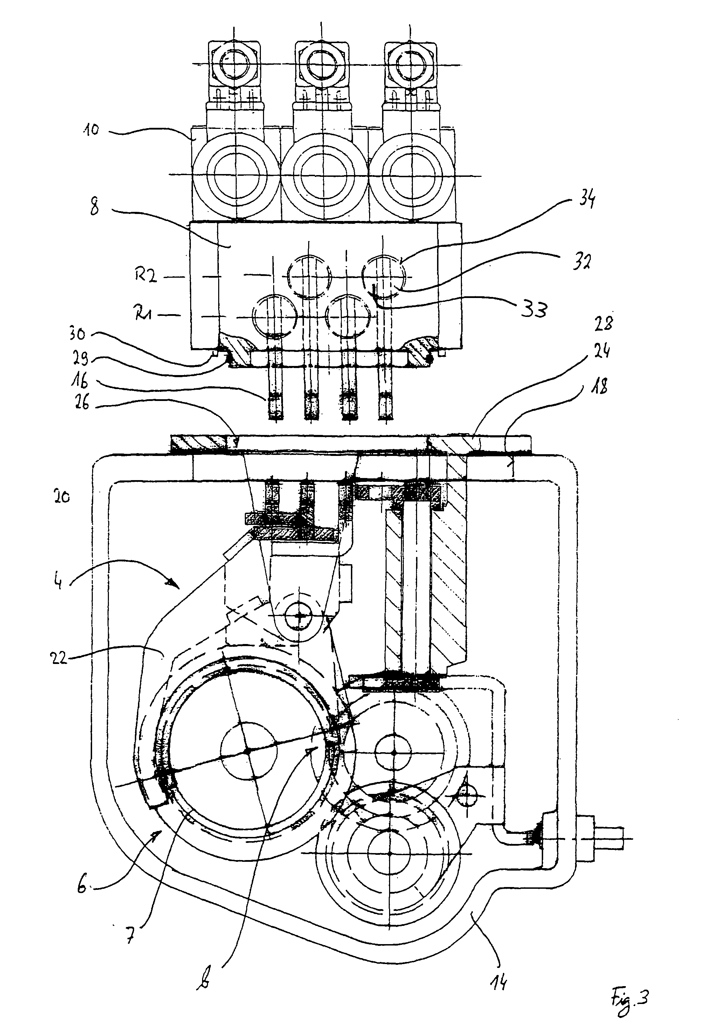

Ein erfindungsgemäßes Getriebe 1 ist in der Abbildung von Fig. 1 in perspektivischer Darstellung im montierten Zustand ohne eine Glocke gezeigt. Das Getriebe 1 umfaßt eine elektro-hydraulische Steuerung 2, ein Schaltgabelmodul 4 und ein Standard-Getriebemodul 6 mit Wellen, Zahnrädern und verschieblichen Schaltmuffen 7 sowie hier nicht weiter dargestellten Lagerungen und Dichtungen. Die elektro-hydraulische Steuerung 2 umfaßt von außen sichtbar einen Steuerblock 8 und Magnetventile 10, die hier mit zwei unterschiedlichen Arten elektrischer Steckkontakte 12, 13 dargestellt sind. Das Getriebe 1 ist mit einer Kupplung eines Kraftfahrzeugs verbunden, wobei von der Kupplung in Fig. 1 eine Hälfte eines Kupplungsgehäuses 9 dargestellt ist. In Fig. 1 sind anhand der dargestellten Größenverhältnisse die kompakte und raumsparende Bauform der elektro-hydraulischen Steuerung 2 verdeutlicht.

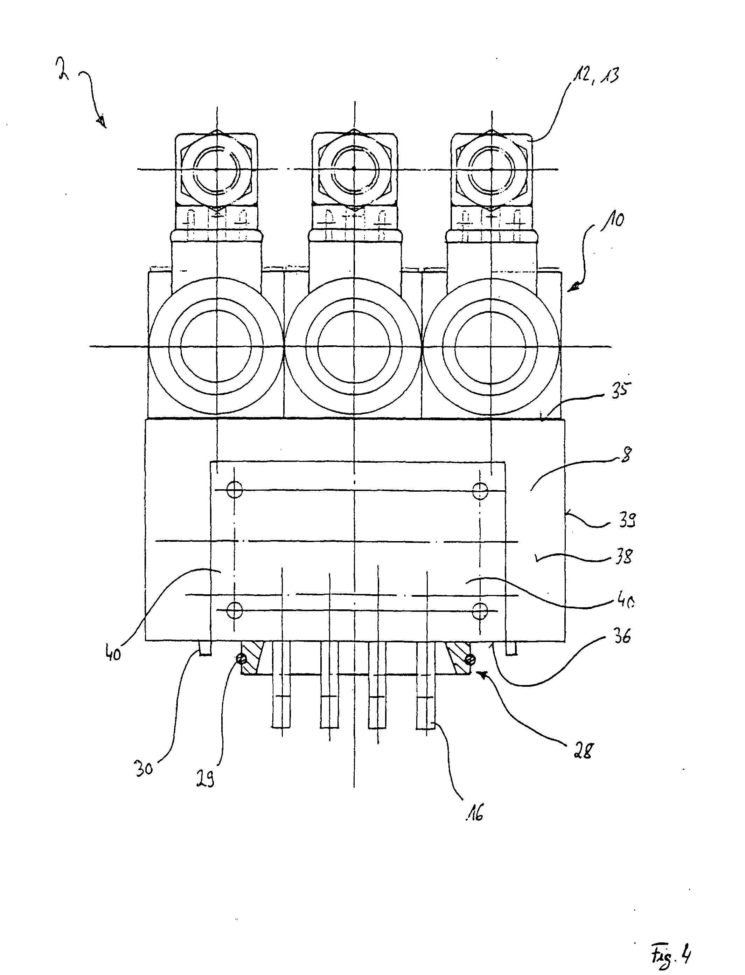

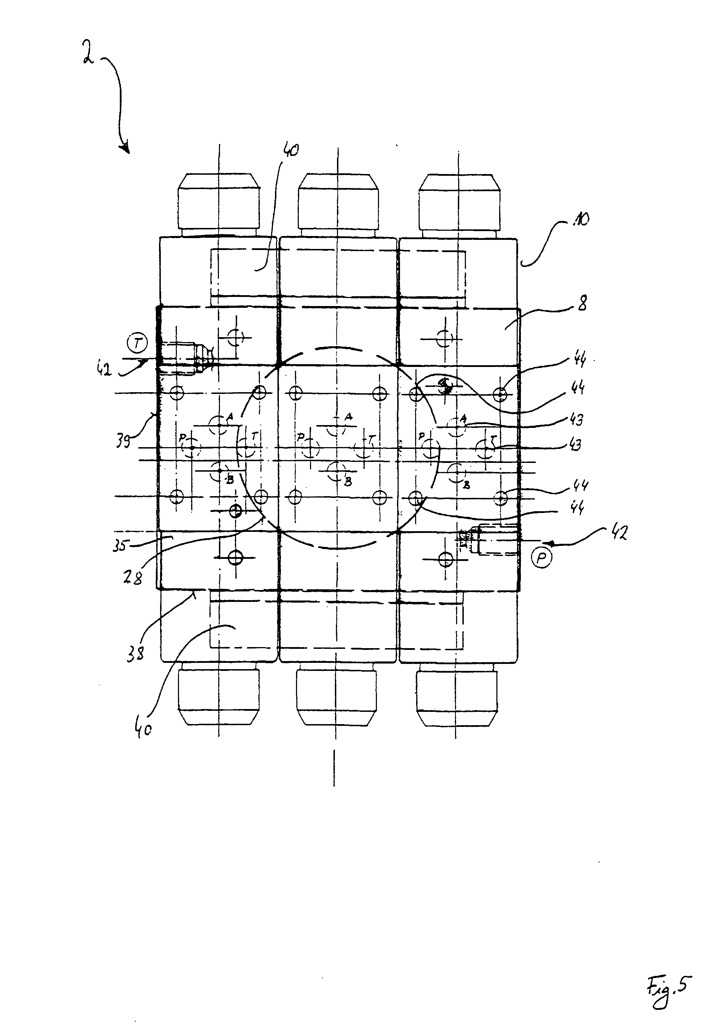

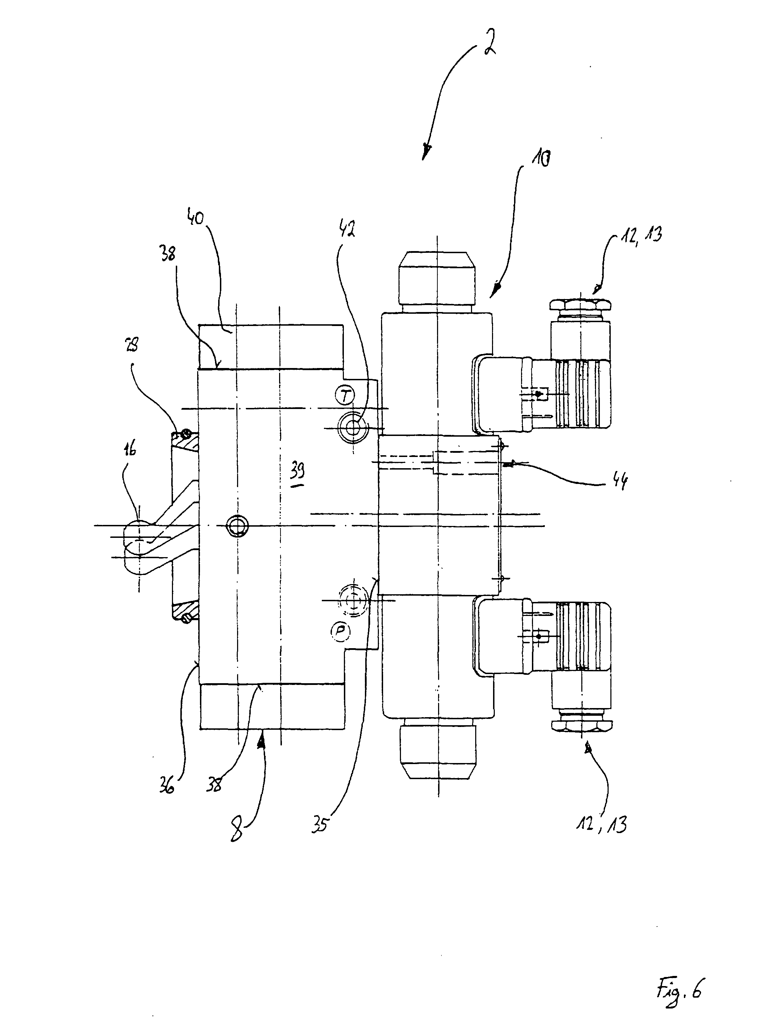

Ein Schnitt durch das durch die Glocke 14 geschlossene und vollständig zusammengesetzte Getriebe 1 zeigt als Fig. 2 das Ineinandergreifen von elektro-hydraulischer Steuerung 2, Schaltgabelmodul 4 und Standard-Getriebemodul 6. In der dargestellten ersten Ausführungsform der elektro-hydraulischen Steuerung 2 greifen vier Schaltfinger 16 aus dem Steuerblock 8 heraus durch eine Öffnung 18 der Glocke 14 hindurch. In der Glocke 14 stehen die Schaltfinger 16 in einem Bereich a in Berührungskontakt mit je einem Mitnehmer 20 des Schaltgabelmoduls 4. Die Mitnehmer 20 sind einstückig mit Schaltgabeln 22 ausgebildet, die auf einer Schaltgabelstange 23 verschieblich in der Glocke 14 angeordnet sind. Die Schaltgabeln 22 bilden im zusammengesetzten Zustand einen Kontaktbereich b mit den Schaltmuffen 7 des Standard-Getriebemoduls 6, wobei die Schaltmuffen 7 der Zahnräder zum Einstellen eines bestimmten Gangs des Getriebes 1 durch einen zugehörigen Schaltfinger 16 der Steuerung 2 verschoben werden.

Die Steuerung 2 ist über eine Basis 24 abdichtend mit der Glocke 14 verbunden. Dabei verschließt die Basis 24 weiter auch die Öffnung 18 abdichtend, die in ihrer Größe und Abmessung den Erfordernissen einer Montage der drehenden Getriebeteile und auch dem Einschieben des fertig montierten Schaltgabelmoduls 4 angepaßt ist. Ferner trägt die Basis 24 auch das Schaltgabelmodul 4 an Halterungen 25.

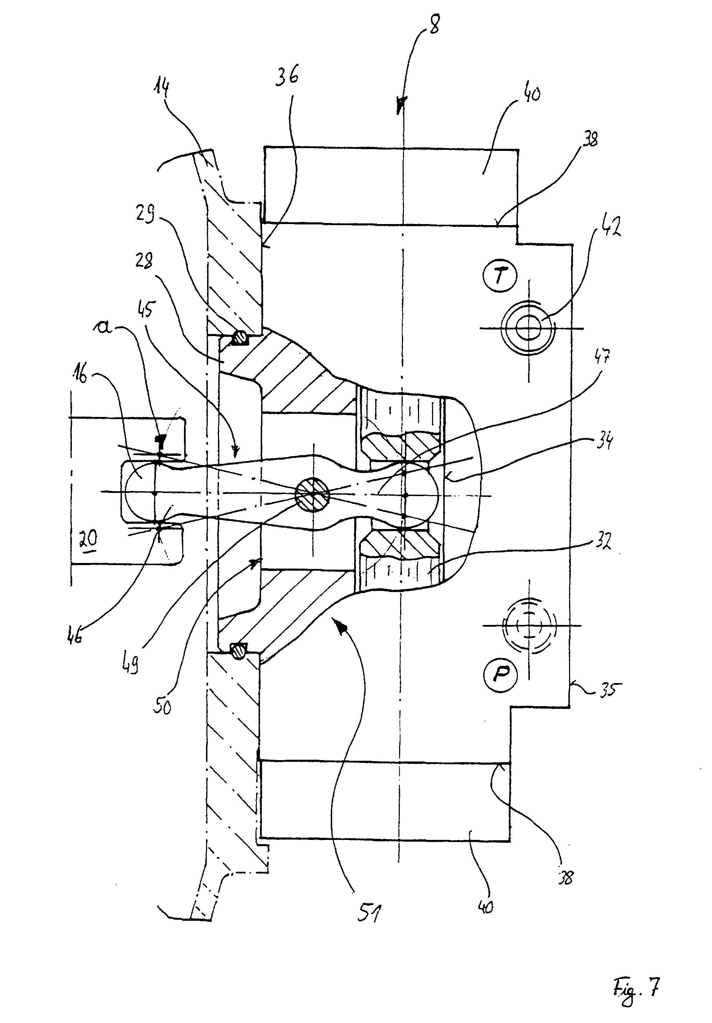

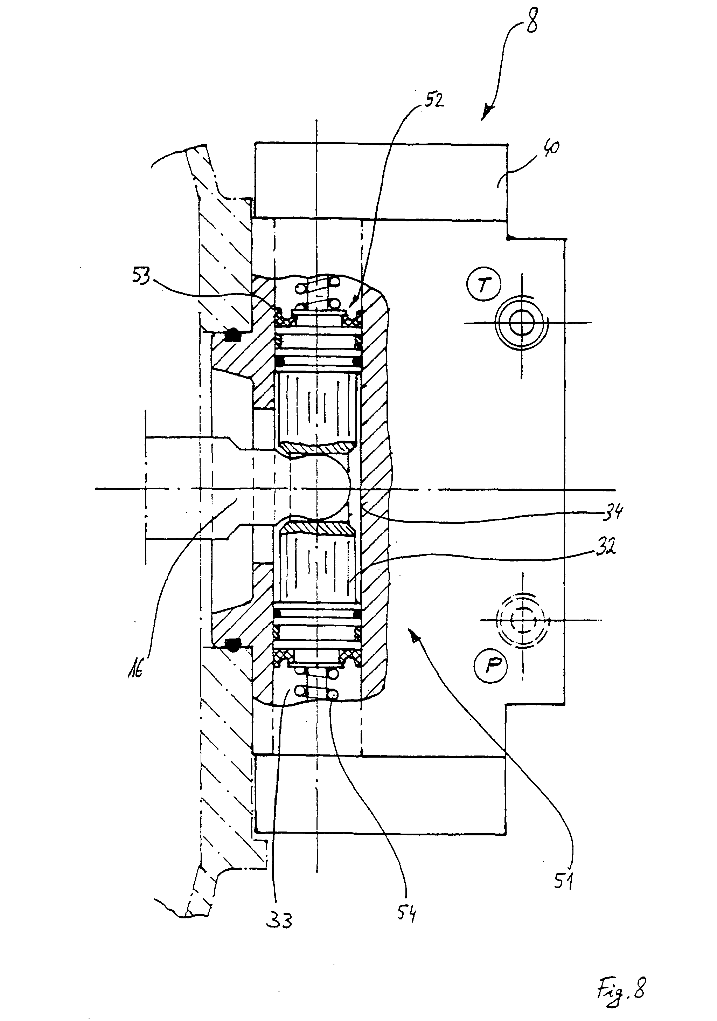

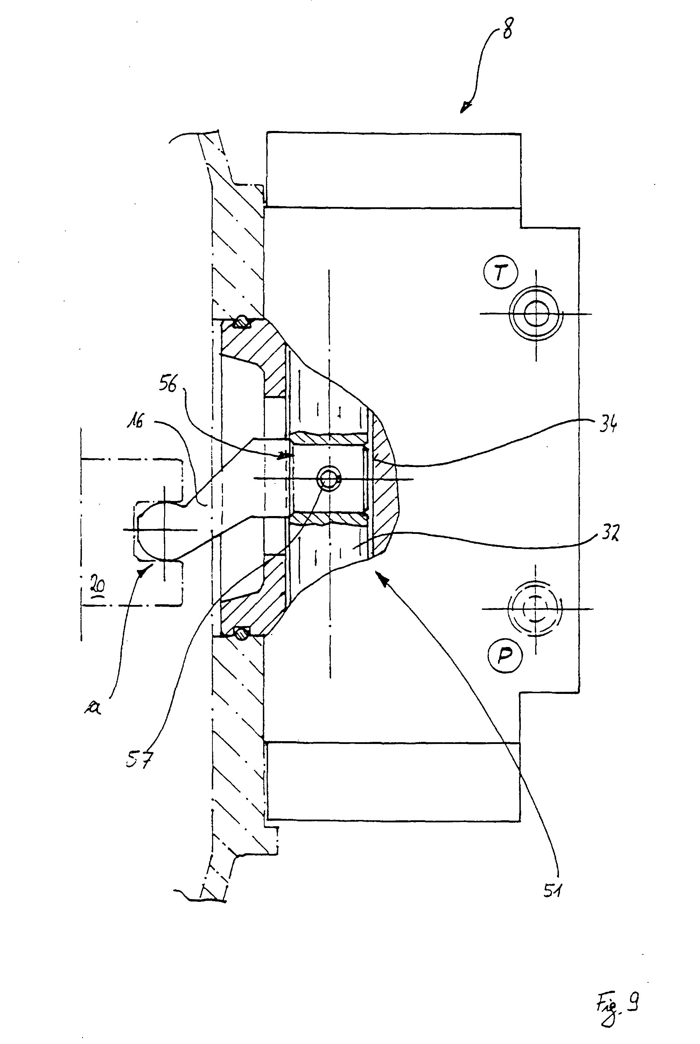

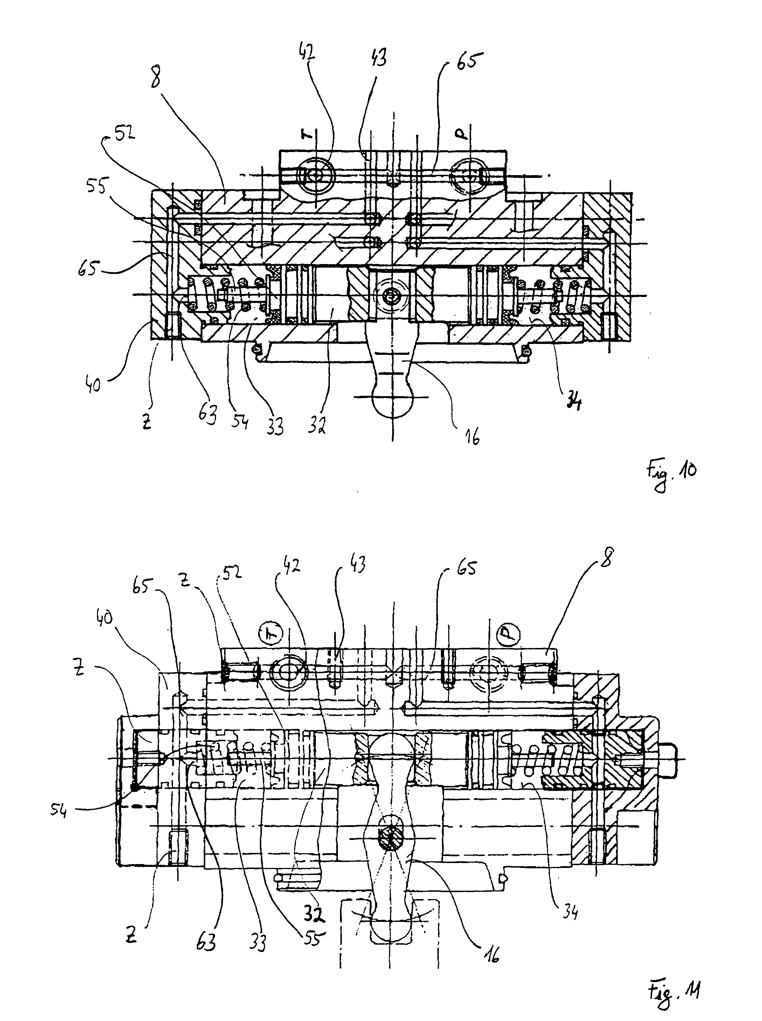

Im Zuge der Umsetzung des modularen Konzepts des dargestellten Getriebes 1 wird nach der Fertigstellung des Standard-Getriebemoduls 6 die Öffnung 18 der Glocke 14 durch Einführen des Schaltgabelmoduls 4 mit der Basis 24 verschlossen, Fig. 3. Zwischen den Schaltgabeln 22 des Schaltgabelmoduls 4 und den Schaltmuffen 7 der Zahnräder des Standard-Getriebemoduls 6 ist dabei automatisch der Kontaktbereich b gebildet worden. Die Basis 24 weist ihrerseits eine Öffnung 26 auf, die nachfolgend mit einem Flansch 28 des Steuerblocks 8 über einen Dichtring 29 abdichtend verbunden ist. Außerhalb des Flanschs 28 sind als weitere Führung beim Zusammensetzen des Steuerblocks 8 auf der Basis 24 ferner Zentrierstifte 30 vorgesehen, siehe Fig. 4.

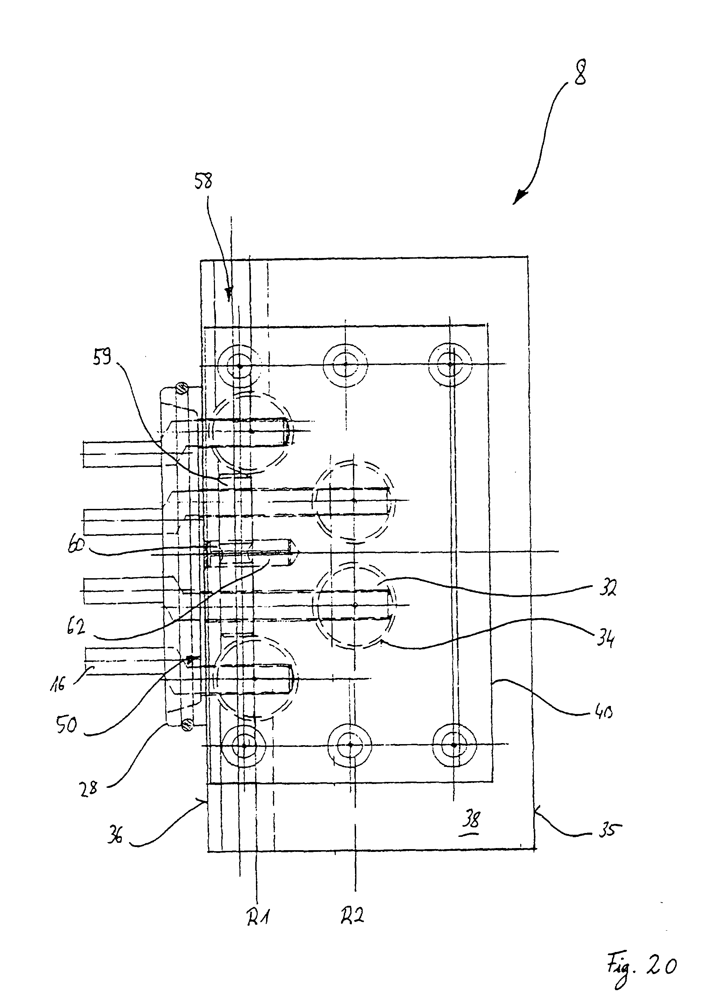

Der Kontaktbereich a zwischen je einem Schaltfinger 16 und je einem Mitnehmer 20 des Schaltgabelmoduls 4 wird erst beim Zusammensetzen hergestellt. Die Schaltfinger 16 können parallel und zueinander in engem Abstand aus dem Steuerblock 8 herauslaufen. In der Darstellung von Fig. 3 ist skizzenhaft eine Möglichkeit angedeutet, wie in dem Steuerblock 8 der enge Stand der Schaltfinger 16 in Anpassung auf die Anordnung der Mitnehmer 20 des beispielsweise standardisierten Schaltgabelmoduls 4 realisiert wird: Die Schaltfinger 16 werden über Schaltkolben 32 angetrieben, die zum Schalten in Druckkammern 33 an Endbereichen von Schaltzylindern 34 mit Hydraulikfluid beaufschlagt werden. Die Schaltzylinder 34 sind in zwei Reihen R1, R2 und gegeneinander versetzt angeordnet. Hierdurch wird der Steuerblock 8 in seinem Aufbau sehr kompakt. Nachfolgend werden zwei Ausführungsformen unter Bezug auf die Abbildungen der Figuren 18 und 20 noch im Detail beschrieben werden.

In Fig. 4 ist die elektro-hydraulische Steuerung 2 von Fig. 1 in einer vergrößerten Darstellung wiedergegeben, um alle Einzelheiten an dem Steuerblock 8 übersichtlich in ihrer Lage erklären zu können. Der Steuerblock 8 ist flachquaderförmig ausgebildet und weist eine erste Oberseite 35 und eine zweite Oberseite 36 auf. In diesem Ausführungsbeispiel sind die erste und die zweite Oberseite 35, 36 als gegenüberliegende Oberseiten des quaderförmigen Steuerblocks 8 ausgebildet. Das muß aber nicht zwingend so sein, auch andere Bauformen und Anordnungen können je nach Anwendungsfall sinnvoll sein.

An der ersten Oberseite 35 sind die Magnetventile 10 durch Verschrauben befestigt. An der zweiten Oberseite 36 befindet sich der Flansch 28 mit dem Dichtring 29 und den Zentrierstiften 30 zur Herstellung einer exakten und dauerhaft dichten Verbindung auf der Glocke 14 z.B. in der in Fig. 3 dargestellten Form. Aus dem Bereich des Flanschs 28 heraus ragen wiederum vier Schaltfinger 16. Ferner weist der Steuerblock 8 eine lange Längsseite 38 und eine kurze Längsseite 39 auf. An der langen Längsseite 38 ist eine Abdeckung in Form einer Platte 40 befestigt.

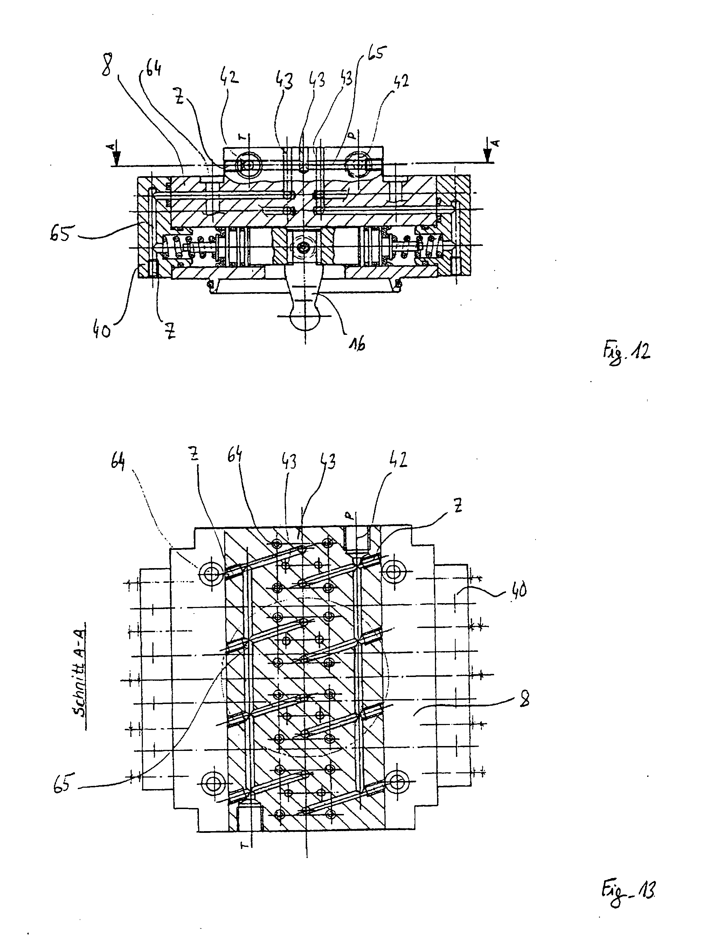

An der kurzen Längsseite 39 ist jeweils ein Druckanschluß 42 angeordnet, wobei einer mit P für druckreiches Medium bzw. Druckzuführung und der andere mit T als Zuführung eines Druckmediums zum Tank bzw. Druckableitung gekennzeichnet ist, wie in der Draufsicht auf die elektro-hydraulische Steuerung 2 von Fig. 5 dargestellt. Auf der ersten Oberseite 35 sind weitere Druckanschlüsse 43 für jedes der drei Magnetventile 10 vorgesehen. Die Druckanschlüsse 43 sind gleichermaßen mit P für Druckzuführung und T für Druckableitung gekennzeichnet, wobei die zwei je Magnetventil 10 zusätzlich vorgesehenen Druckanschlüsse A und B die Steuerkanäle bzw. Steuerdruckleitungen bezeichnen, durch die je nach Schaltzustand eines Magnetventils 10 ein Schaltkolben 32 in einem Schaltzylinder 34 bewegt wird, die hier nicht dargestellt sind. Weiter sind in der Abbildung von Fig. 5 auch je vier Befestigungslöcher 44 zum Anschrauben der Magnetventile 10 eingezeichnet.

In einer Seitenansicht der elektro-hydraulischen Steuerung 2 von Fig. 6 ist die insgesamt geringe Bauhöhe von der zweiten Oberfläche 36 bis hin zu den elektrischen Steckkontakten 12, 13 der Magnetventile 10 erkennbar. Der Flansch 36 ist mit den darin umschlossenen Schaltfingern 16 im zusammengebauten Zustand des Getriebes in der Glocke 14 eingesetzt, so daß er keinen weiteren Bauraum beansprucht. Mit den elektrischen Steckkontakten 12, 13 jeder der drei Magnetventile 10 sowie den in den kurzen Längsseiten 39 des Steuerblocks 8 angeordneten Druckanschlüssen 42 mit der vorstehend beschriebenen Zuordnung T und P sind in Fig. 6 auch alle Anschlüsse der elektro-hydraulischen Steuerung 2 dargestellt. Zum Anschließen der elektro-hydraulischen Steuerung 2 dieser Ausführungsform für die Steuerung eines Fünfganggetriebes sind damit insgesamt nur eine mehradrige elektrische Leitung mit entsprechenden Einzelanschlüssen und zwei hydraulische Leitungen erforderlich, für die in bekannter Weise Schnellverschlüsse vorgesehen sind.

Es wird nun unter Bezugnahme auf Fig. 7 auf den Innenaufbau des Steuerblocks 8 eingegangen. Fig. 7 zeigt als Ausschnitt den Steuerblock 8 in einer Einbaulage an der Glocke 14 fixiert, wobei der Flansch 28 in die Öffnung 18 hinein greift und über den Dichtring 29 abgedichtet ist. In dieser Lage wird durch den Schaltfinger 16 der Kontaktbereich a mit dem Mitnehmer 20 gebildet. Dabei ist der Schaltfinger 16 in dieser ersten Ausführungsform als Doppelhebel 45 mit unterschiedlich langen Teilhebeln 46, 47 ausgebildet. Auf der einen Seite einer Lagerung 49 ist der Teilhebel 46 angeordnet, der mit dem Mitnehmer 20 in Kontakt steht. Gegenüberliegend befindet sich ein gegenüber dem Teilhebel 46 kürzerer Teilhebel 47, der durch eine Ausnehmung 50 hindurch in den Zylinder 34 eingreift und drehbar bzw. schwenkbar in dem Schaltkolben 32 gelagert ist. Durch die Veränderung der Längenverhältnisse der Teilhebel 46, 47 sind Anpassungen der Schaltwege durch Modifikation einer beschriebenen Einheit 51 aus Schaltzylinder 34, Schaltkolben 32 und Schaltfinger 16 leicht möglich.

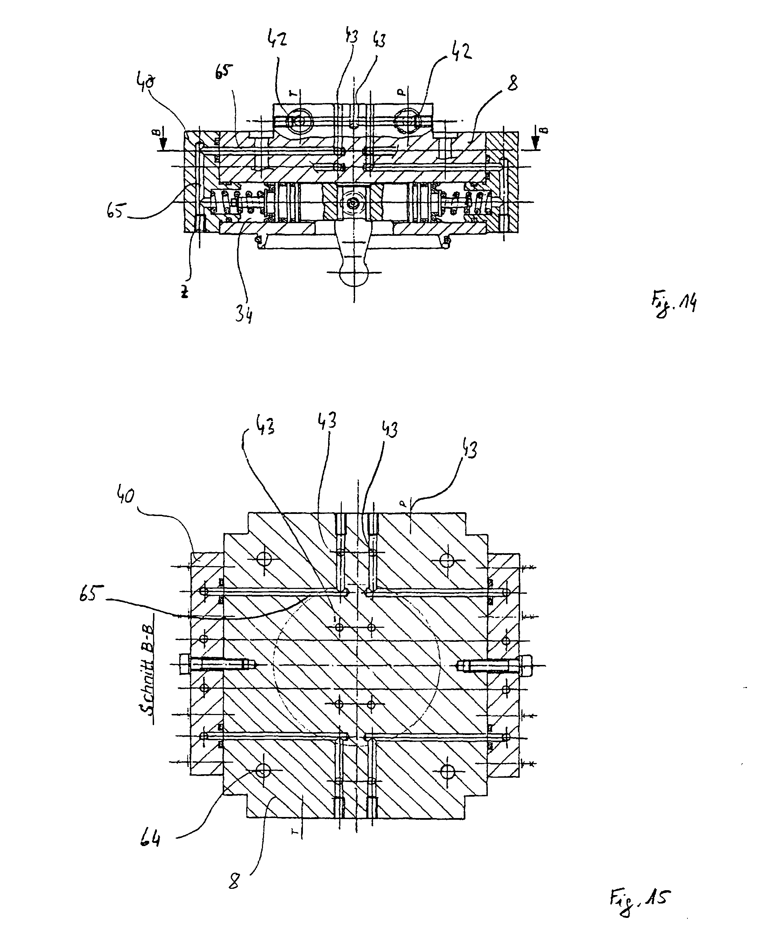

Die Druckbeaufschlagung des Schaltkolbens 32 erfolgt in dem Zylinder 34 jeweils endseitig in Druckkammern 33 im Bereich der langen Längsseite 38 bzw. der Platte 40. Dabei sind die Zylinder 34 in dem Steuerblock 8 als Durchgangsbohrungen ausgeführt, wie zu einer zweiten Ausführungsform des Steuerblocks 8 in der Abbildung von Fig. 8 angedeutet ist. In der Ausführungsform von Fig. 8 ist der Schaltfinger 16 mit dem Mitnehmer 20 einstückig ausgeführt, so daß der Kontaktbereich a als gelenkige Verbindung in dem Schaltkolben 32 ausgebildet ist. Ohne Veränderungen des Schaltzylinders 34 ist auch der Schaltkolben 32 weiter einstückig aufgebaut und an Endseiten 52 in bekannter Weise mit Dichtungen 53 versehen. An die Dichtungen 53 anschließend ist je Endseite 52 ein Federelement 54 angeordnet, das bei Auslenkung des Schaltkolbens 32 aus der in Fig. 8 dargestellten mittleren, neutralen Lage heraus eine Gegenkraft aufbaut. Bei Nachlassen des Drucks wird der Schaltkolben 32 und damit auch der Schaltfinger 16 automatisch in eine neutrale Lage zurück bewegt, und der eingelegte Gang wird über den zugehörigen Mitnehmer 20 gelöst.

In einer weiteren Ausführungsform gemäß Fig. 9 ist der Schaltfinger 16 mit dem Schaltkolben 32 einstückig verbunden ausgeführt. Hierzu ist der Schaltfinger 16 in eine angepaßte Ausnehmung 56 des Schaltkolbens 32 eingeführt und durch einen Zapfen 57 gesichert worden. So wird der Kontaktbereich a wieder zwischen dem Schaltfinger 16 und dem Mitnehmer 20 gebildet, wobei die Situation mit der gemäß Fig. 7 vergleichbar ist. Alle weiteren Elemente des Steuerblocks 8 erfahren gegenüber den beschriebenen Ausführungsformen keine Veränderungen.

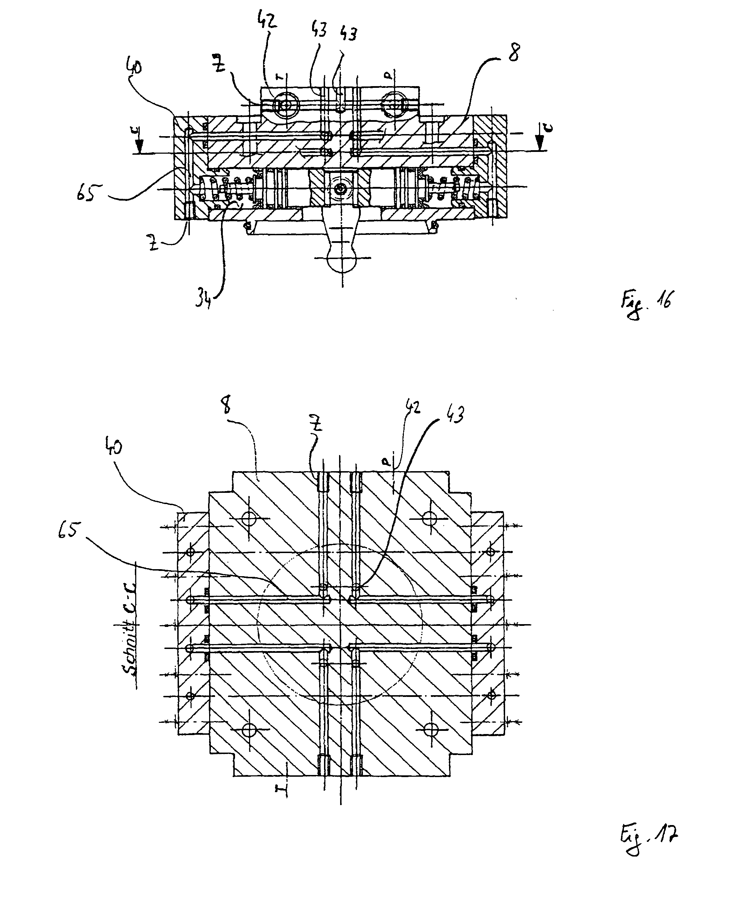

Neben den Schaltkolben 32 werden nun anhand der Abbildungen der Fig. 10 und 11 zwei Ausführungsformen von Druckkammern 33 bzw. Schaltzylindern 34 mit Darstellung der jeweiligen inneren Druckversorgungs- und Druckverbindungsleitungen 65 beschrieben. Diese Druckversorgungs- und Druckverbindungsleitungen 65 sind als ineinander übergehende bzw. miteinander verbundene Bohrungen ausgeführt. Die Bohrungen sind an bestimmten fertigungstechnisch bedingten Stellen nach außen druck- und flüssigkeitsdicht durch Zapfen Z verschlossen. Ferner sind die Zapfen Z in bekannter Weise z.B. mit eigenen Dichtungen in die entsprechenden Bohrungen eingeschraubt. In beiden Ausführungsformen sind weiter Bohrungen vorgesehen, die durch den Steuerblock 8 hindurch laufen, um die Schaltzylinder 34 zu bilden.

Zur Reduzierung der Baugröße des Steuerblocks 8 selber sind in den Ausführungsformen der Fig. 10 und 11 die Druckversorgungs- und Druckverbindungsleitungen 65 mit ihren jeweiligen Anschlüssen an die in Endbereichen eines jeden Schaltzylinders 34 befindlichen Druckkammern 33 in die Platten 40 verlagert. Die Druckversorgungs- und Druckverbindungsleitungen 65 münden axial zu der Bewegungsrichtung des jeweiligen Schaltkolbens 32 in den Druckkammern 33 ein. Auch in den Platten 40 werden die Druckversorgungs- und Druckverbindungsleitungen 65 als Bohrungen abdichtend und fluchtend mit den entsprechenden Bohrungen in dem Steuerblock 8 ausgeführt.

Beiden Ausführungsformen gemeinsam ist die Anordnung eines Stiftfortsatzes 55 an der Endseite 52 des Schaltkolbens 32. Der Stiftfortsatz 55 ist an dem Schaltkolben 32 einstückig angeformt und erstreckt sich in axialer Richtung des Schaltkolbens 32 in die Druckkammer 33 hinein. Hier dient der Stiftfortsatz 55 zum Halten bzw. Führen des Federelements 54, das für die Einrichtung einer Neutralposition in einem drucklosen Zustand ausgelegt ist, wie vorstehend beschrieben.

Der Stiftfortsatz 55 ist weiter zum Eingriff in eine Druckversorgungs- und Druckverbindungsleitung 65 bzw. Ausströmöffnung 63 des jeweiligen Schaltzylinders 34 angepaßt ausgebildet. Wird der Schaltkolben 32 aus seiner Neutrallage heraus in die Druckkammer 33 weiter hineingeschoben, so wird dabei gleichzeitig ein in der Druckkammer 33 enthaltenes druckloses Fluid aus der Druckkammer 33 herausgepreßt. Dabei übt die dargestellte Anordnung eine steuernde Funktion mit der Wirkung einer Endlagendämpfung aus, was nun beschrieben wird. Ohne eine Endlagendämpfung in einem Bereich des Schaltzylinders 34 würde der mit dem Schaltkolben 32 verbundene Schaltfinger 16 ungebremst in einer Endstellung an einer Gehäusewand am Ende der Ausnehmung 50 anschlagen. Das würde ein Klopfgeräusch erzeugen und könnte schließlich zu erhöhtem Verschleiß an dem Schaltkolben 32 bzw. dem Schaltfinger 16 führen. Theoretisch kann im Bereich der Endstellung des Schaltkolbens 32 ein weiteres Federelement als Endanschlag angeordnet werden. Hydraulische Betriebsdrücke von ca. 80 bis 200 bar stellen aber besonders hohe Anforderungen an einen derartigen Endanschlag. Vorteilhafterweise ist in den Ausführungsformen der Fig. 10 und 11 der Stiftfortsatz 55 zum Eingriff in eine Druckversorgungs- und Druckverbindungsleitung 65 des jeweiligen Schaltzylinders 34 derart ausgebildet, daß ein rechtzeitig einsetzendes Abbremsen eines Schaltkolbens 32 durch fortschreitende Drosselung der Geschwindigkeit des aus der Druckkammer 33 ausströmenden Fluids bewirkt wird. Dazu vermindert der Stiftfortsatz 55 durch ein mit der Bewegung in die Endstellung fortschreitendes Eindringen in die Ausströmöffnung 63 den freien Querschnitt der Druckversorgungs- und Druckverbindungsleitung 65. Ferner bremst auch das Federelement 54 mit seinen im Bereich der Ausströmöffnung 63 angeordneten Windungen die Ausströmgeschwindigkeit des Fluids. Die so aufgebaute Drossel wird bei geringem fertigungstechnischen Mehraufwand und ohne das Vorsehen weiterer Einzelteile in dem Steuerblock 8 integriert. Sie arbeitet verschleißfrei und ist darüber hinaus bei sehr geringem Platzbedarf direkt an jeder Druckkammer 33 ohne weitere Steuerschaltungen etc. in dem Steuerblock 8 anzuordnen.

Der Bereich um die Druckkammer 33 ist in der Ausführungsform von Fig. 11 durch einen separat ausgeführten Zapfen in Kolbenform verschlossen, der Dichtungen und Bohrungen für die Druckversorgungs- und Druckverbindungsleitungen 65 aufweist. Als mechanische Fixierung dient jeweils die Platte 40, an der der Zapfen fixiert ist, hier durch eine Verschraubung.

Bei der in Fig. 10 dargestellten Alternative ist unter Einsparung weiterer Einzelteile die Platte 40 mit dem Zapfen aus einem Stück gefertigt. Die Platte 40 wird vorzugsweise in einem Druckgußverfahren hergestellt. Sie zeichnet sich durch eine gegenüber der Ausführungsform von Fig. 11 reduzierte Baugröße aus.

Beide dargestellten Ausführungsformen weisen an Schnittstellen der jeweiligen Druckversorgungs- und Druckverbindungsleitungen 65 zwischen den Platten 40 und dem Steuerblock 8 Dichtungen und sonstige konstruktive Sicherungsmaßnahmen in dem Fachmann bekannter Weise auf. Ein Schaltfinger 16 gemäß der Ausführungsform von Fig. 9 ist in der Bauform von Fig. 10 in gerader Bauweise eingesetzt worden, während in Fig. 11 ein Schaltfinger 16 gemäß der Ausführungsform von Fig. 7 vorgesehen ist. Es sind aber beliebige Kombinationen der vorstehenden Varianten zur Anpassung an einen konkreten Anwendungsfall in einem weiten Bereich ausführbar.

Nachfolgend wird eine konkrete Ausführungsform einer elektro-hydraulischen Steuerung 2 unter Bezugnahme auf Schnittdarstellungen mehrerer Ebenen beschrieben. Zur Orientierung ist in Fig. 12 die Schnittdarstellung der elektro-hydraulischen Steuerung 2 von Fig. 10 mit Angabe einer Schnittebene A-A dargestellt. Fig. 13 zeigt eine Schnittdarstellung der Schnittebene A-A von Fig. 12 mit Druckanschlüssen 42 für eine Druckzuführung P und eine Druckableitung T sowie Druckversorgungs- und Druckverbindungsleitungen 65 zur Anbindung an die Druckanschlüsse 43 der in Fig. 12 nicht weiter dargestellten Magnetventile 10. Weiter sind in der Schnittebene A-A von Fig. 13 Befestigungslöcher 64 zum Befestigen der Magnetventile 10 und zum Befestigen des Steuerblocks 8 der elektro-hydraulischen Steuerung 2 zu sehen.

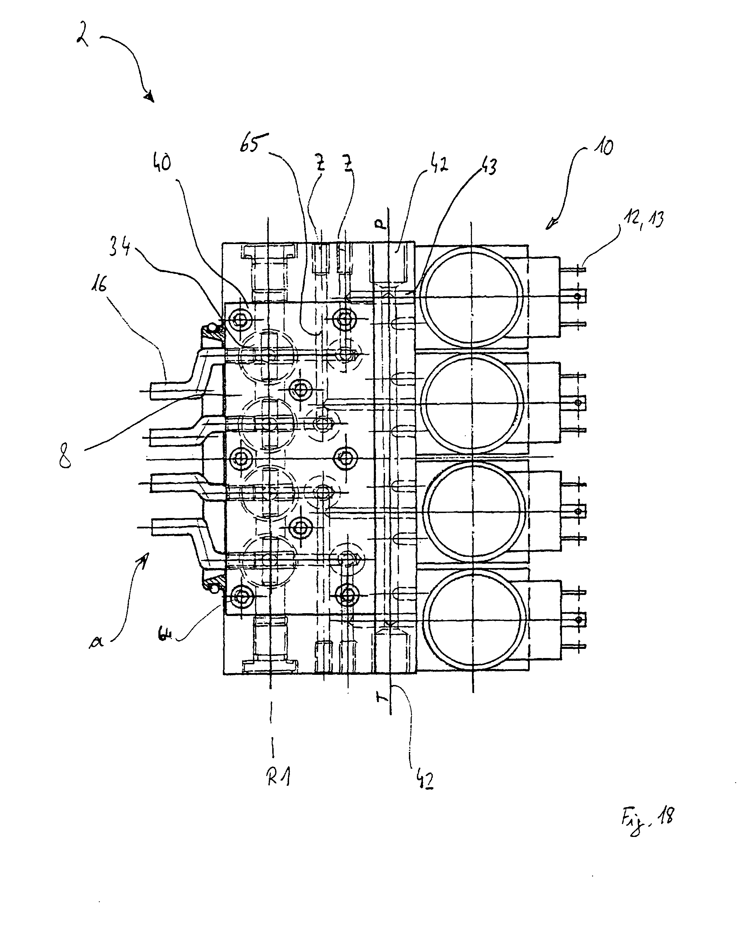

In der Schnittdarstellung der elektro-hydraulischen Steuerung 2 von Fig. 14 ist eine Schnittebene B-B angegeben, deren Schnittansicht in der Abbildung von Fig. 15 dargestellt ist. In der sichtbaren Schnittebene liegen die Druckversorgungs- und Druckverbindungsleitungen 65, die sich von Druckanschlüssen 43 der beiden außen liegenden Magnetventile 10 zu zwei auch im Steuerblock 8 außen liegend angeordneten Schaltzylindern 34 hin erstrecken. Die Druckversorgungs- und Druckverbindungsleitungen 65 verlaufen über die Platten 40, wie eine Zusammenschau aus Fig. 14 und Fig. 15 zeigt.

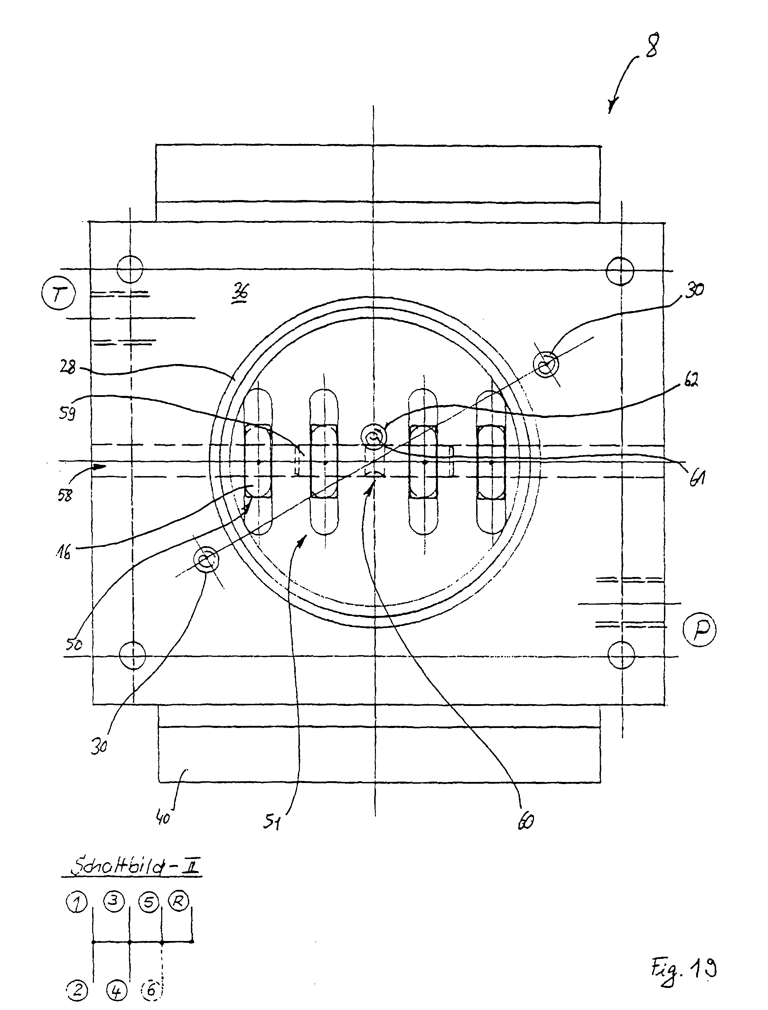

Schließlich ist in der Schnittdarstellung von Fig. 16 eine Schnittebene C-C eingezeichnet, und die zugehörige Schnittdarstellung zeigt die Abbildung von Fig. 17. In der sichtbaren Schnittebene liegen die Druckversorgungs- und Druckverbindungsleitungen 65, die von Druckanschlüssen 43 der beiden innen liegenden Magnetventile 10 zu zwei auch im Steuerblock 8 innen liegend angeordneten Schaltzylindern 34 verlaufen. Ein Vergleich mit der Darstellung von Fig. 15 zeigt, daß die Druckversorgungs- und Druckverbindungsleitungen 65 teilweise deckungsgleich liegen. Das ist durch die Lage der Druckanschlüsse 43 der beiden zu versorgenden Magnetventile 10 bedingt. Unter Nutzung der Vorteile einer einfachen Fertigung wird die dargestellte Verlagerung in parallele Ebenen gewählt. Alternativ wäre auch eine Anordnung in einer gemeinsamen Ebene bei entsprechend aus einer orthogonalen Ausrichtung heraus geneigten Bohrungen der Druckversorgungs- und Druckverbindungsleitungen 65 möglich, z.B. im Bereich der Druckanschlüsse 43.

Fig. 18 zeigt eine Schnittdarstellung einer ersten Bauform einer vollständig aufgebauten elektro-hydraulischen Steuerung 2 für ein Fünf- oder Sechsgang-Getriebe in einer Seitenansicht. Zur Anpassung an eine Schnittstelle mit (hier nicht dargestellten) Mitnehmern 20 von Schaltgabeln 22 in dem Kontaktbereich a sind die Schaltfinger 16 gekröpft ausgebildet. Die vier Schaltzylinder 34 sind in einer gemeinsamen Ebene R1 nebeneinander angeordnet. In weiteren Ebenen innerhalb des Steuerblocks 8 sind Druckversorgungs- und Druckverbindungsleitungen 65 sowie Befestigungslöcher 64 zur Befestigung der Platten 40 und/oder zum Verschließen von Bohrungen angedeutet, die im Detail in den Abbildungen der Fig. 12, 13, 15 und 17 dargestellt sind. In unmittelbarer Nachbarschaft zu den Magnetventilen 10 sind Druckanschlüsse P und T mit einem Verteilernetz zu den Druckanschlüssen der Magnetventile 10 angeordnet, so daß alle Anschlüsse 12, 13, 42 bei fertig montiertem Getriebe 1 von außen zugänglich sind. Der hydraulische Bereich des Steuerblocks 2 ist dabei gegenüber dem jenseits des Kontaktbereichs a angeordneten eigentlichen mechanischen Teil des Getriebes klar getrennt, so daß eine unerwünschte Vermischung der verschiedenen fluiden Medien ohne weiteren Aufwand in der Regel auszuschließen ist.

Der Steuerblock 8 kann mit jeder der drei beispielhaft anhand der Abbildungen der Figuren 7-9 beschriebenen Ausführungsformen der Einheiten 51 mit Schaltzylinder 34, Schaltkolben 32 und Schaltfinger 16 mit den Alternativen der Figuren 10 und 11 realisiert werden. Dazu ist die jeweilige Einheit 51 nur entsprechend häufig auszuführen, also erfindungsgemäß drei- oder vierfach. In einer bevorzugten Ausführungsform eines Steuerblocks 8 werden jedoch zwei der vorstehend beschriebenen Ausführungsformen der Einheit 51 miteinander kombiniert eingesetzt. Die Abbildung von Fig. 19 zeigt in einer Draufsicht auf die zweite Oberfläche 36 eines Steuerblocks 8 für die Ansteuerung eines Fünf- oder Sechsgang-Getriebes mit einer Anordnung der Gänge gemäß dem dargestellten Schaltbild II. Innerhalb des als Ring ausgeführten Flanschs 28 sind an der zweiten Oberfläche 36 des Steuerblocks 8 vier Ausnehmungen 50 angeordnet. Außerhalb des Flanschs 28 sind an der zweiten Oberfläche 36 weiter zwei Zentrierstifte 30 befestigt. Die Ausnehmungen 50 mit dem jeweils darin beweglichen Schaltfinger 16 sind die einzigen von außen sichtbaren Teile einer jeden Einheit 51. Der konkrete Aufbau des Innern des Steuerblocks 8 ist also nicht sichtbar. Es handelt sich hier als Alternative zu der Ausführung gemäß der Abbildung von Fig. 18 um eine Mischung der Ausführungsformen der Einheiten 51 nach Fig. 7 und Fig. 9, wobei die beiden Einheiten 51 nach der Ausführungsform gemäß Fig. 7 innen liegen und von den Einheiten 51 nach der Ausführungsform gemäß Fig. 9 quasi flankiert werden. Zur Befestigung der als Doppelhebel 45 ausgeführten Schaltfinger 16 nach der Ausführungsform gemäß Fig. 7 ist in dem Steuerblock 8 eine Durchgangsbohrung 58 vorgesehen, durch die ein Bolzen 59 eingeschoben ist. Der Bolzen 59 weist eine Taillierung 60 auf, durch die der Bolzen 59 nach Einschieben eines Federstifts 61 in eine Sackbohrung 62 in seiner Lage in der Durchgangsbohrung 58 gesichert ist. Der Bolzen 59 ist in seiner Länge auf die Ausdehnung der beiden Einheiten 51 nach der Ausführungsform gemäß Fig. 7 angepaßt, so daß er die Funktionsweise der außenseitig angeordneten Einheiten 51 nicht stört.

In Fig. 20 ist eine der Ausführungsform von Fig. 19 entsprechende Draufsicht auf die lange Längsseite 38 dargestellt, wobei einige Elemente der Einheiten 51 unter der Platte 40 skizziert sind. Hier ist dargestellt, daß durch die Anordnung der Schaltzylinder 34 in zwei Reihen R1, R2 Raum für den Bolzen 59 geschaffen wird. Die Schaltfinger 16 sind der Bauform ihrer jeweiligen Einheit 51 entsprechend in der Länge angepaßt. Weiter sind in der Darstellung von Fig. 20 an der Platte 40 angeordnete Befestigungsschrauben angedeutet, die gemeinsam mit den Zylindern 34 durch eingreifende Zapfen verschlossen werden, die an der Platte 40 beispielsweise einstückig angeordnet und mit zusätzlichen Dichtmitteln, wie z.B. O-Ringen, versehen sind. Die Zapfen können auch in den Deckel 40 eingeschraubt werden.

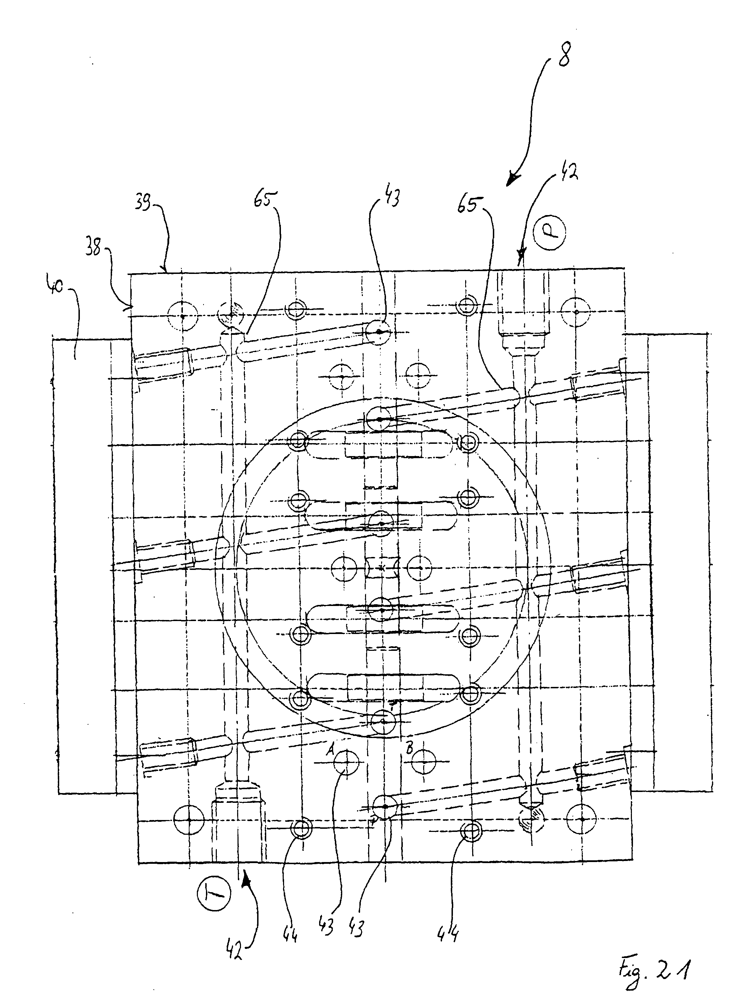

Als Erweiterung der Darstellung von Fig. 19 sind in Fig. 21 Druckversorgungs- und Druckverbindungsleitungen 65 in ihrem Verlauf innerhalb des Steuerblocks 8 angedeutet. Diese Anordnung ist gegenüber der von Fig. 13 variiert. Die Druckversorgungs- und Druckverbindungsleitungen 65 verlaufen jeweils in einer Ebene und stehen im wesentlichen senkrecht aufeinander. So sind diese Leitungen durch Bohrprogramme in CNC-Maschinen herstellbar oder im Fall eines Steuerblocks 8 aus Druckguß durch ein ähnliches Programm den Anforderungen an die Maßhaltigkeit der Teile spanend nachbearbeitbar. Die logische Zuordnung der Druckanschlüsse 43 ist beispielsweise entsprechend der Darstellung von Fig. 5 gegeben.

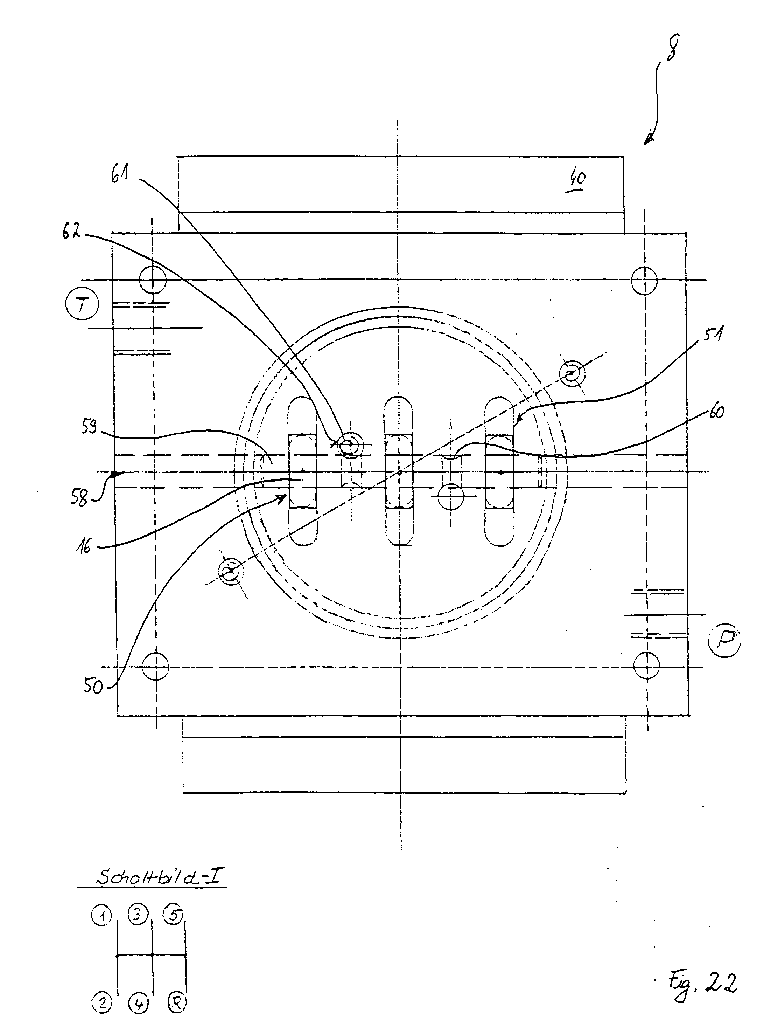

Fig. 22 zeigt eine weitere Ausführungsform eines Steuerblocks 8, der auf einen Einsatz zur Steuerung eines Fünfgang-Getriebes angepaßt ist. Die Belegung der Schaltzylinderstellungen mit den entsprechenden Gängen ist im Schaltbild I angegeben. Der Steuerblock 8 umfaßt hier nur die Einheiten 51 gemäß der Ausführungsform von Fig. 7. Der Bolzen 59 weist zwei Taillierungen 60 auf, so daß eine Sicherung des Bolzens 59 in der Durchgangsbohrung 58 wahlweise durch eine von zwei Sackbohrungen 62 vorgenommen werden kann. Wiederum ist eine Reduktion des Fünfganggetriebes auf 4 Gänge analog zu dem Vorgehen gemäß Fig. 19 bzw. dem Schaltbild II möglich.

## Patentansprüche

1. Elektro-hydraulische Steuerung (2) für ein Personenkraftfahrzeug-Getriebe (1), mit einen Steuerblock (8), der
- aus einem einstückigen Körper gebildet ist,
- an einer ersten Oberfläche (35) zur Anordnung von Magnetventilen (10) sowie deren Druckversorgung und
- an einer zweiten Oberfläche (36) als Verschluß zur Befestigung über einer Öffnung (18) einer Glocke (14) des Getriebes (6) ausgebildet ist, wobei
- der Steuerblock (8) in seinem Inneren Schaltzylinder (34) mit axial verschieblichen Schaltkolben (32) umfaßt,
**dadurch gekennzeichnet, daß**
- an den Schaltkolben (32) jeweils ein Schaltfinger (16) zur Herstellung eines Kontaktbereiches (a) mit einem Mitnehmer (20) einer Schaltgabel (22) des Getriebes (6) zur Kraftübertragung zugänglich angeordnet ist.

2. Elektro-hydraulische Steuerung nach Anspruch 1, **dadurch gekennzeichnet, daß** der Steuerblock (8) im wesentlichen flachquaderförmig ist mit der ersten Oberfläche (35) und zweiten Oberfläche (36) sowie zwei langen Längsseiten (38) und zwei kurzen Längsseiten (39).

3. Elektro-hydraulische Steuerung nach einem oder mehreren der vorhergehenden Ansprüche, **dadurch gekennzeichnet, daß** zur Druckversorgung der Magnetventile (10) in der ersten Oberfläche (35) Druckanschlüsse (42) von Druckleitungen vorgesehen sind, die in dem Steuerblock (8) integriert sind.

4. Elektro-hydraulische Steuerung nach einem oder mehreren der vorhergehenden Ansprüche, **dadurch gekennzeichnet, daß** an den kurzen Längsseiten (39) je ein Druckanschluß (42) für die Druckversorgung der elektro-hydraulischen Steuerung (2) angeordnet sind, insbesondere in Form einer Druckzuführung (P) und einer Druckableitung (T).

5. Elektro-hydraulische Steuerung nach einem oder mehreren der vorhergehenden Ansprüche, **dadurch gekennzeichnet, daß** die Schaltkolben (32) in einem jeweiligen Schaltzylinder (34) aus einer Nullposition im drucklosen Zustand durch Druckbeaufschlagung axial in zwei Schaltpositionen verschieblich sind.

6. Elektro-hydraulische Steuerung nach einem oder mehreren der vorhergehenden Ansprüche, **dadurch gekennzeichnet, daß** die Verschiebung der Schaltkolben (32) in die Schaltpositionen gegen eine Rückstellkraft erfolgt, die insbesondere durch je ein Federelement (54) erzeugt ist.

7. Elektro-hydraulische Steuerung nach dem vorhergehenden Anspruch, **dadurch gekennzeichnet, daß** an einem Schaltkolben (32) ein Stiftfortsatz (55) vorgesehen ist, insbesondere zum Halten bzw. Führen des Federelements (54) in axialer Richtung.

8. Elektro-hydraulische Steuerung nach einem oder mehreren der vorhergehenden Ansprüche 6 und 7, **dadurch gekennzeichnet, daß** das Federelement (54) in einer Druckkammer (33) eines Schaltzylinders(34) angeordnet ist.

9. Elektro-hydraulische Steuerung nach einem oder mehreren der vorhergehenden Ansprüche 6 - 8, **dadurch gekennzeichnet, daß** der Stiftfortsatz (55) an dem Schaltkolben (32) zum Eingriff in eine Ausströmöffnung (63) der Druckversorgungs- und Druckverbindungsleitung (65) des jeweiligen Schaltzylinders (34) ausgebildet ist, insbesondere bei Anordnung im Bereich einer passiven bzw. drucklosen Totlage.

10. Elektro-hydraulische Steuerung nach dem vorhergehenden Anspruch, **dadurch gekennzeichnet, daß** der Stiftfortsatz (55) in der bzw. zusammen mit der Ausströmöffnung (63) der Druckversorgungs- und Druckverbindungsleitungen (65) als Drossel und/oder Endlagendämpfung ausgebildet ist.

11. Elektro-hydraulische Steuerung nach einem oder mehreren der vorhergehenden Ansprüche, **dadurch gekennzeichnet, daß**
- der Steuerblock (8) aus einem massiven Metall besteht und
- die Schaltzylinder (34) sowie alle Druckversorgungsund Druckverbindungsleitungen (65) als Bohrungen sowie Durchbrüche und
- Ausnehmungen (50) für Schaltfinger (16) an der zweiten Oberfläche (36) vorzugsweise als Fräsungen ausgeführt sind.

12. Elektro-hydraulische Steuerung nach einem oder mehreren der vorhergehenden Ansprüche, **dadurch gekennzeichnet, daß** die Druckversorgungs- und Druckverbindungsleitungen (65) als miteinander stellenweise verbundene und im wesentlichen senkrecht zueinander stehende, von den langen Längsseiten (38) aus verlaufende Bohrungen ausgebildet sind.

13. Elektro-hydraulische Steuerung nach einem oder mehreren der vorhergehenden Ansprüche, **dadurch gekennzeichnet, daß** die Druckversorgungs- und Druckverbindungsleitungen (65) in mehreren zueinander im wesentlichen parallelen Ebenen angeordnet sind.

14. Elektro-hydraulische Steuerung nach einem oder mehreren der vorhergehenden Ansprüche, **dadurch gekennzeichnet, daß** die Anschlüsse der Magnetventile (10) an dem Steuerblock (8) sowie die Verbindungen zu den Zylindern als Bohrungen ausgeführt sind.

15. Elektro-hydraulische Steuerung nach einem oder mehreren der vorhergehenden Ansprüche, **dadurch gekennzeichnet, daß** einige der Bohrungen nach außen hin vorzugsweise durch Blindstopfen verschlossen und insbesondere durch je eine Abdeckung an den langen Längsseiten (38) gesichert sind, wobei die Abdeckung vorzugsweise in Form einer Platte (40) ausgeführt ist.

16. Elektro-hydraulische Steuerung nach Anspruch 11, **dadurch gekennzeichnet, daß** in einer Platte (40) Teile der Druckversorgungs- und Druckverbindungsleitungen (65) integriert sind, wozu vorzugsweise Dichtungselemente vorgesehen sind.

17. Elektro-hydraulische Steuerung nach einem oder mehreren der vorhergehenden Ansprüche, **dadurch gekennzeichnet, daß** der Schaltfinger (16) in einem mittleren Bereich des Schaltkolbens (32) angelenkt ist.

18. Elektro-hydraulische Steuerung nach einem oder mehreren der vorhergehenden Ansprüche, **dadurch gekennzeichnet, daß** der Schaltfinger (16) in einen mittleren Bereich des Schaltkolbens (32) schwenkbar hinein ragt und über eine Lagerung (49) in dem Steuerblock (8) fixiert ist.

19. Elektro-hydraulische Steuerung nach einem oder mehreren der vorhergehenden Ansprüche, **dadurch gekennzeichnet, daß** der Schaltfinger (16) in einem mittleren Bereich des Schaltkolbens (32) im wesentlichen senkrecht zu der axialen Verschiebungsrichtung an dem Schaltkolben (32) fixiert ist.

20. Elektro-hydraulische Steuerung nach einem oder mehreren der vorhergehenden Ansprüche, **dadurch gekennzeichnet, daß** der Steuerblock (8) zur Ansteuerung eines Fünfgang-Getriebes mindestens drei Schaltkolben (32) enthält, vorzugsweise aber vier Schaltkolben (32).

21. Elektro-hydraulische Steuerung nach einem oder mehreren der vorhergehenden Ansprüche, **dadurch gekennzeichnet, daß** die Schaltzylinder (34) an den langen Längsseiten (38) des Steuerblocks (8) in einer Reihe angeordnet sind.

22. Elektro-hydraulische Steuerung nach einem oder mehreren der vorhergehenden Ansprüche, **dadurch gekennzeichnet, daß** die Schaltzylinder (34) an den langen Längsseiten (38) des Steuerblocks (8) zueinander versetzt in zwei Reihen (R1, R2) angeordnet sind.

23. Elektro-hydraulische Steuerung nach einem oder mehreren der vorhergehenden Ansprüche, **dadurch gekennzeichnet, daß** als Magnetventile (10) Standardventile eingesetzt sind, die insbesondere mit elektrischen Steckanschlüssen (12, 13) versehen sind und durch Ab- und Anschrauben austauschbar sind.

24. Elektro-hydraulische Steuerung nach einem oder mehreren der vorhergehenden Ansprüche, **dadurch gekennzeichnet, daß** der Steuerblock (8) an der zweiten Oberfläche (36) zum Abdichten der Öffnung (18) der Glocke (14) des Getriebes (6) einen Flansch (28) mit einer Dichtung vorzugsweise in Form eines O-Rings und als Hilfe zur Positionierung und zur genauen Ausrichtung insbesondere mindestens einen Zentrierstift (30) aufweist.

25. Getriebe mit einer elektro-hydraulische Steuerung (2) nach einem oder mehreren der vorhergehenden Ansprüche.

## Claims

1. An electrohydraulic control (2) for a car gear box (1), having a control block (8), which is
- formed of an integral body,
- formed at a first surface (35) for arranging magnetic valves (10) as well as a pressure supply therefor and
- formed at a second surface (36) as a cover to be attached over an opening (18) of a housing (14) of the gear box (6), wherein
- the control block (8), in its interior, comprises switching cylinders (34) having axially displaceable switching pistons (32),
**characterized in that**
- at each switching piston (32) a switching finger (16) is arranged for creating a contact area (a) with a dog (20) of a shift fork (22) of the gear box (6) accessible for power transmission.

2. The electrohydraulic control according to claim 1, **characterized in that** the control block (8) has essentially the shape of a flat rectangular parallelepiped having a first surface (35) and a second surface (36) as well as two elongate lateral surfaces (38) and two short lateral surfaces (39).

3. The electrohydraulic control according to one or more of the preceding claims, **characterized in that**, for pressure supply of the magnetic valves (10), in the first surface (35) pressure ports (42) of pressure lines integral with the control block (8) are provided.

4. The electrohydraulic control according to one or more of the preceding claims, **characterized in that**, at each of the short lateral surfaces (39), a pressure port (42) is disposed for pressure supply of the electrohydraulic control (2), in particular in the form of a pressure supply (P) and a pressure outlet (T).

5. The electrohydraulic control according to one or more of the preceding claims, **characterized in that** the switching pistons (32) in each switching cylinder (34) are axially displaceable from a neutral position in an unpressurized state to two switching positions by the application of pressure.

6. The electrohydraulic control according to one or more of the preceding claims, **characterized in that** the displacement of the switching pistons (32) into the switching position is done against a restoring force which is generated in particular by a spring element (54).

7. The electrohydraulic control according to the preceding claim, **characterized in that** at a switching piston (32) a pin protrusion (55) is provided, in particular for holding or guiding the spring element (54) in an axial direction.

8. The electrohydraulic control according to one or more of the preceding claims 6 and 7, **characterized in that** the spring element (54) is arranged in a pressure chamber (33) of a switching cylinder (34).

9. The electrohydraulic control according to one or more of the preceding claims 6 to 8, **characterized in that** the pin protrusion (55) is formed at the switching piston (32) for engaging an exhaust opening (63) of the pressure supply and pressure connection lines (65) of each switching cylinder (34), in particular when positioned in the area of a passive or unpressurized dead position.

10. The electrohydraulic control according to the preceding claim, **characterized in that** the pin protrusion (55) within or together with the exhaust opening (63) of the pressure supply and pressure connection lines (65) is formed to be a throttle and/or an end-of-travel damping means.

11. The electrohydraulic control according to one or more of the preceding claims, **characterized in that**
- the control block (8) is made of solid metal, and
- the switching cylinder (34) as well as all pressure supply and pressure connection lines (65) are formed as bores as well as passages, and
- recesses (50) for switching fingers (16) at the second surface (36) are preferably milled.

12. The electrohydraulic control according to one or more of the preceding claims, **characterized in that** the pressure supply and pressure connection lines (65) are formed as bores communicating in places and essentially vertically aligned to one another and extending from the elongate lateral surfaces (38).

13. The electrohydraulic control according to one or more of the preceding claims, **characterized in that** the pressure supply and connection lines (65) are arranged in a plurality of essentially parallel planes.

14. The electrohydraulic control according to one or more of the preceding claims, **characterized in that** the connections of the magnetic valves (10) at the control block (8) as well as the connections to the cylinders are formed as bores.

15. The electrohydraulic control according to one or more of the preceding claims, **characterized in that** some of the bores are blocked to the outside preferably using blind stoppers and in particular each secured by a cover at the elongate lateral surfaces (38), wherein the cover is preferably formed to be a plate (40).

16. The electrohydraulic control according to claim 11, **characterized in that** portions of the pressure supply and pressure connection lines (65) are integral with a plate (40), sealing elements being preferably provided therefor.

17. The electrohydraulic control according to one or more of the preceding claims, **characterized in that** the switching finger (16) is linked to the switching piston (32) in a central area.

18. The electrohydraulic control according to one or more of the preceding claims, **characterized in that** the switching finger (16) pivotably reaches into a central area of the switching piston (32) and is fixed in the control block (8) via a bearing (49).

19. The electrohydraulic control according to one or more of the preceding claims, **characterized in that** the switching finger (16) is fixed in a central area of the switching piston (32) on the switching piston (32) essentially vertical to the axial displacement direction.

20. The electrohydraulic control according to one or more of the preceding claims, **characterized in that** the control block (8) for controlling a five-speed gear box includes at least three switching pistons (32), however preferably four switching pistons (32).

21. The electrohydraulic control according to one or more of the preceding claims, **characterized in that** the switching cylinders (34) are disposed in a row at the elongate lateral surfaces (38) of the control block (8).

22. The electrohydraulic control according to one or more of the preceding claims, **characterized in that** the switching cylinders (34) at the elongate lateral surfaces (38) of the control block (8) are staggered in two rows (R1, R2).

23. The electrohydraulic control according to one or more of the preceding claims, **characterized in that**, as the magnetic valves (10), standard valves are used which are in particular provided with electric plug connectors (12, 13) and are exchangeable by being screwed on and off.

24. The electrohydraulic control according to one or more of the preceding claims, **characterized in that**, for sealing the opening (18) of the housing (14) of the gear box (6), the control block (8) includes at the second surface (36) a flange (28) having a seal preferably in the form of an o-ring and, in order to help positioning and precise alignment, in particular at least one centering pin (30).

25. A gear box having an electrohydraulic control (2) according to one or more of the preceding claims.

## Revendications

1. Commande électro-hydraulique (2) pour une boîte de vitesses d'une automobile (1) avec un bloc de commande (8) qui
- est formé par un corps en une pièce,
- est configuré sur une première surface (35) pour le placement de vannes magnétiques (10) ainsi que pour leur alimentation en pression et
- sur une seconde surface (36) comme fermeture pour la fixation au-dessus d'une ouverture (18) d'une cloche (14) de la boîte de vitesses (6),
- le bloc de commande (8) comprenant dans son intérieur des cylindres de commutation (34) avec des pistons de commutation (32) mobiles axialement,
**caractérisée en ce que**
- respectivement un doigt de commutation (16) est placé accessible sur le piston de commutation (32) pour fabriquer une zone de contact (a) avec un entraîneur (20) d'une fourchette de boîte de vitesses (22) de la boîte de vitesses (6) pour la transmission de force.

2. Commande électro-hydraulique selon la revendication 1, **caractérisée en ce que** le bloc de commande (8) est substantiellement en forme de parallélépipède plat avec la première surface (35) et la seconde surface (36) ainsi qu'avec deux côtés longitudinaux longs (38) et deux côtés longitudinaux courts (39).

3. Commande électro-hydraulique selon l'une ou plusieurs des revendications précédentes, **caractérisée en ce que** des raccords de pression (42) de conduites de pression qui sont intégrés dans le bloc de commande (8) sont prévus pour l'alimentation en pression des vannes magnétiques (10) dans la première surface (35).

4. Commande électro-hydraulique selon l'une ou plusieurs des revendications précédentes, **caractérisée en ce que** respectivement un raccord de pression (42) pour l'alimentation en pression de la commande électro-hydraulique (2) est placé sur chacun des côtés longitudinaux courts (39), en particulier en forme d'une admission de pression (P) et d'une évacuation de pression (T).

5. Commande électro-hydraulique selon l'une ou plusieurs des revendications précédentes, **caractérisée en ce que** les pistons de commutation (32) sont mobiles dans un cylindre de commutation respectif (34) par une charge de pression axialement à partir d'une position zéro en état sans pression dans deux positions de commutation.

6. Commande électro-hydraulique selon l'une ou plusieurs des revendications précédentes, **caractérisée en ce que** le déplacement des pistons de commutation (32) dans les positions de commutation se fait contre une force de rappel qui est produite en particulier par respectivement un élément à ressort (54).

7. Commande électro-hydraulique selon la revendication précédente, **caractérisée en ce qu'**un prolongement de broche (55) est prévu sur un piston de commutation (32), en particulier pour maintenir et/ou guider l'élément à ressort (54) dans le sens axial.

8. Commande électro-hydraulique selon l'une ou plusieurs des revendications précédentes 6 et 7, **caractérisée en ce que** l'élément à ressort (54) est placé dans une chambre dé compression (33) d'un cylindre de commutation (34).

9. Commande électro-hydraulique selon l'une ou plusieurs des revendications précédentes 6 à 8, **caractérisée en ce que** le prolongement de broche (55) sur le piston de commutation (32) est configuré pour l'engrènement dans une ouverture d'échappement (63) de la conduite d'alimentation en pression et de liaison de pression (65) du cylindre de commutation respectif (34), en particulier pour un placement dans la zone d'un point mort passif ou sans pression.

10. Commande électro-hydraulique selon la revendication précédente, **caractérisée en ce que** le prolongement de broche (55) dans ou avec l'ouverture d'échappement (63) des conduites d'alimentation en pression et de liaison de pression (65) est configuré comme étranglement et/ou comme amortissement de position d'extrémité.

11. Commande électro-hydraulique selon l'une ou plusieurs des revendications précédentes, **caractérisée en ce que**
- le bloc de commande (8) est constitué en un métal massif et
- les cylindres de commutation (34) ainsi que toutes les conduites d'alimentation en pression et de liaison de pression (65) sont réalisés comme des perçages ainsi que des brèches et
- des évidements (50) pour des doigts de commutation (16) sur la seconde surface (36) sont réalisés de préférence comme des fraisages.

12. Commande électro-hydraulique selon l'une ou plusieurs des revendications précédentes, **caractérisée en ce que** les conduites d'alimentation en pression et de liaison de pression (65) sont configurées comme des perçages reliés par endroit l'un à l'autre, substantiellement perpendiculaires l'un à l'autre et qui partent des côtés longitudinaux longs (38).

13. Commande électro-hydraulique selon l'une ou plusieurs des revendications précédentes, **caractérisée en ce que** les conduites d'alimentation en pression et de liaison de pression (65) sont placées dans plusieurs plans substantiellement parallèles l'un à l'autre.

14. Commande électro-hydraulique selon l'une ou plusieurs des revendications précédentes, **caractérisée en ce que** les raccords des vannes magnétiques (10) sur le bloc de commande (8) ainsi que les liaisons aux cylindres sont réalisés comme des perçages.

15. Commande électro-hydraulique selon l'une ou plusieurs des revendications précédentes, **caractérisée en ce que** quelques-uns des perçages sont fermés vers l'extérieur de préférence par des tampons borgnes et sont bloqués en particulier chacun par un couvercle sur les côtés longitudinaux longs (38), le couvercle étant réalisé de préférence en forme de plaque (40).

16. Commande électro-hydraulique selon la revendication 11, **caractérisée en ce que** des parties des conduites d'alimentation en pression et de liaison de pression sont intégrées dans une plaque (40), ce pour quoi des éléments d'étanchéité sont de préférence prévus.

17. Commande électro-hydraulique selon l'une ou plusieurs des revendications précédentes, **caractérisée en ce que** le doigt de commutation (16) est articulé dans une zone centrale du piston de commutation (32).

18. Commande électro-hydraulique selon l'une ou plusieurs des revendications précédentes, **caractérisée en ce que** le doigt de commutation (16) fait saillie à l'intérieur de manière pivotante dans la zone centrale du piston de commutation (32) et est fixé par un palier (49) dans le bloc de commande (8).

19. Commande électro-hydraulique selon l'une ou plusieurs des revendications précédentes, **caractérisée en ce que** le doigt de commutation (16) est fixé sur le piston de commutation (32) dans une zone centrale du piston de commutation (32) substantiellement perpendiculairement au sens de déplacement axial.

20. Commande électro-hydraulique selon l'une ou plusieurs des revendications précédentes, **caractérisée en ce que** le bloc de commande (8) contient pour l'excitation d'une boîte de vitesses à cinq vitesses au moins trois pistons de commutation (32), mais de préférence quatre pistons de commutation (32).

21. Commande électro-hydraulique selon l'une ou plusieurs des revendications précédentes, **caractérisée en ce que** les cylindres de commutation (34) sont placés en une rangée sur les côtés longitudinaux longs (38) du bloc de commande (8).

22. Commande électro-hydraulique selon l'une ou plusieurs des revendications précédentes, **caractérisée en ce que** les cylindres de commutation (34) sont placés décalés l'un par rapport à l'autre en deux rangées (R1, R2) sur les côtés longitudinaux longs (38) du bloc de commande (8).

23. Commande électro-hydraulique selon l'une ou plusieurs des revendications précédentes, **caractérisée en ce que** des vannes standard sont utilisées comme vannes magnétiques (10), ces vannes étant pourvues en particulier de prises électriques embrochables (12, 13) et pouvant être remplacées en dévissant et vissant.

24. Commande électro-hydraulique selon l'une ou plusieurs des revendications précédentes, **caractérisée en ce que** le bloc de commande (8) présente sur la seconde surface (36) pour étancher l'ouverture (18) de la cloche (14) de la boîte de vitesses (6) une bride (28) avec une étanchéité de préférence en forme d'anneau torique et au moins une pointe de centrage (30) comme auxiliaire de positionnement et pour l'alignement exact.

25. Boîte de vitesses avec une commande électro-hydraulique (2) selon l'une ou plusieurs des revendications précédentes.
